# EUROPEAN PATENT APPLICATION

(11) **EP 4 210 369 A1**
(43) Date of publication of application: **12.07.2023**
(21) Application number: 21871550.6
(22) Date of filing: 23.09.2021
(51) Int. Cl.: H04W 12/08

(54) **METHOD AND APPARATUS FOR PROCESSING NON-ACCESS STRATUM CONTEXT**

(30) Priority: 23.09.2020 CN 202011013180; 27.10.2020 CN 202011163930
(71) Applicant: Huawei Technologies Co., Ltd., Shenzhen, Guangdong 518129 (CN)
(72) Inventor: DENG, Juan, Shenzhen, Guangdong 518129 (CN); YANG, Linping, Shenzhen, Guangdong 518129 (CN); SHU, Lin, Shenzhen, Guangdong 518129 (CN); LI, Fei, Shenzhen, Guangdong 518129 (CN)
(74) Representative: Huawei European IPR
(86) International application number: PCT/CN2021/119930
(87) International publication number: WO 2022/063181

(57) **Abstract**

Embodiments of this application provide a method and an apparatus for processing a non-access stratum context, and relate to the field of communication technologies, to resolve a problem that signaling overheads are increased because a NAS security context stored in a terminal device is inconsistent with a NAS security context stored in a PLMN. A specific solution is as follows: A terminal device sends a registration request message to a first public land mobile network PLMN. The terminal device receives a registration accept message from the first PLMN. When the terminal device deregisters from the first PLMN over a first access network, the terminal device stores, in a storage medium of the terminal device, a first PLMN identifier of the first PLMN and a first NAS security context established by the terminal device with the first PLMN. Embodiments of this application are used for a processing process of the non-access stratum context.

## Description

This application claims priority to Chinese Patent Application No. 202011013180.9, filed with the China National Intellectual Property Administration on September 23, 2020 and entitled "METHOD AND APPARATUS FOR PROCESSING NON-ACCESS STRATUM CONTEXT", and to Chinese Patent Application No. 202011163930.0, filed with the China National Intellectual Property Administration on October 27, 2020 and entitled "METHOD AND APPARATUS FOR PROCESSING NON-ACCESS STRATUM CONTEXT", which are incorporated herein by reference in their entireties.

### TECHNICAL FIELD

Embodiments of this application relate to the field of communication technologies, and in particular, to a method and an apparatus for processing a non-access stratum context.

### BACKGROUND

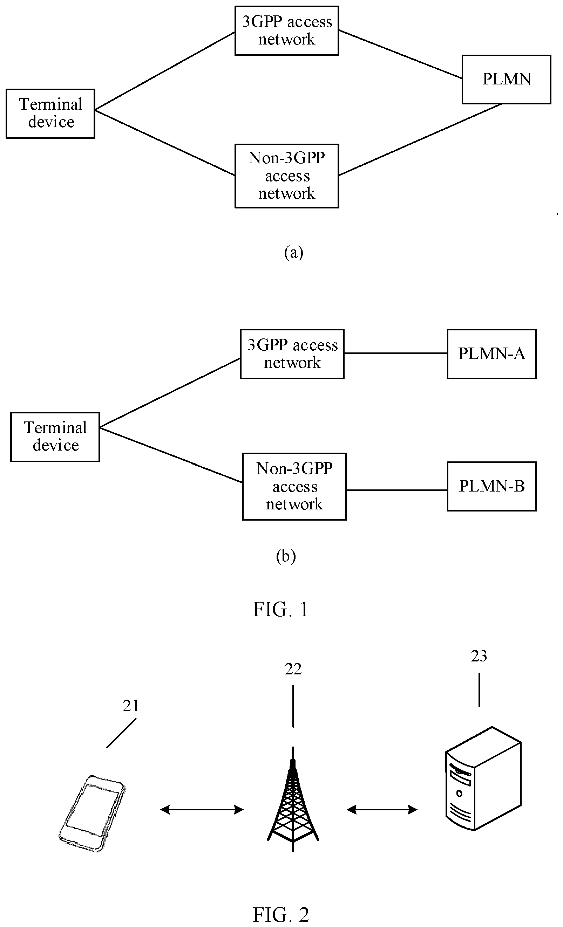

A terminal device may simultaneously establish, over two different types of access networks, namely, a 3rd generation partnership project (3rd generation partnership project, 3GPP) access network (access network) and a non-3GPP (non-3GPP) access network, two non-access stratum (non-access stratum, NAS) connections between the terminal device and a public land mobile network (public land mobile network, PLMN): a 3GPP NAS connection and a non-3GPP NAS connection. As shown in (a) in FIG. 1, a terminal device may register to a PLMN through the two NAS connections at the same time, and a same access and mobility management node of the PLMN serves the terminal device. Alternatively, the terminal device may register to different PLMNs through the two NAS connections respectively. As shown in (b) in FIG. 1, the terminal device establishes a 3GPP NAS connection with a PLMN-A, and the terminal device establishes a non-3GPP NAS connection with a PLMN-B.

When the terminal device deregisters from the PLMN, both the terminal device and the PLMN (or the access and mobility management node of the PLMN) need to store a current native NAS security context (current native NAS security context) (a recently activated native NAS security context) of the terminal device. However, a NAS security context stored in the terminal device may be inconsistent with a NAS security context stored in the PLMN. When the terminal device protects a registration request (registration request, RR) message by using the NAS security context stored in the terminal device, and the PLMN uses a NAS security context different from the NAS security context stored in the terminal device to verify the RR message, the PLMN fails to verify the RR message, and the PLMN initiates primary authentication. The primary authentication causes extra signaling overheads.

The following are examples. (1) The terminal device registers to the PLMN-A over the 3GPP access network and the non-3GPP access network. An access and mobility management node of the PLMN-A serves the terminal device. In this case, the PLMN-A stores a 3GPP NAS security context and a non-3 GPP NAS security context. (2) The terminal device deregisters from the PLMN-A over the non-3GPP access network. In this case, the terminal device stores the non-3GPP NAS security context of the terminal device with the PLMN-A in a storage medium of the terminal device. (3) The terminal device registers to the PLMN-B over the non-3GPP access network, and the terminal device establishes a non-3GPP NAS security context with the PLMN-B. (4) The terminal device deregisters from the PLMN-B over the non-3GPP access network. In this case, the non-3GPP NAS security context with the PLMN-A stored in the terminal device is overwritten, and after the overwriting, the non-3GPP NAS security context that corresponds to the PLMN-B is stored. (5) The terminal device registers to the PLMN-A over the non-3 GPP access network. In this case, the terminal device sends the RR message to the PLMN-A over the non-3GPP access network. Before sending the RR message, the terminal device reads the non-3GPP NAS security context stored in the storage medium. The non-3GPP NAS security context is established between the terminal device and the PLMN-B. The terminal device protects the RR message by using the non-3GPP NAS security context that corresponds to the PLMN-B. However, after receiving the RR message sent by the terminal device over the non-3GPP access network, the PLMN-A verifies the RR message by using the non-3GPP NAS security context that is established by the terminal device with the PLMN-A and that is stored in (1). As a result, the non-3GPP NAS security context stored in the terminal device is inconsistent with the non-3GPP NAS security context stored in the PLMN-A, and the PLMN-A fails to verify the RR message. In this case, the PLMN-A initiates primary authentication, and the primary authentication causes extra signaling overheads.

### SUMMARY

In this application, a NAS security context established by a terminal device with a PLMN or a NAS security context of a terminal device with a PLMN may also be referred to as a NAS security context for short. A NAS security context that is established by the terminal device with the PLMN and that corresponds to a non-3GPP access network or a NAS security context that is of the terminal device with the PLMN and that corresponds to a non-3GPP access network may also be referred to as a non-3GPP NAS security context for short. A NAS security context that is established by the terminal device with the PLMN and that corresponds to a 3GPP access network or a NAS security context that is of the terminal device with the PLMN and that corresponds to a 3GPP access network may also be referred to as a 3GPP NAS security context for short.

In this application document, a storage medium of the terminal device is a USIM of the terminal device, a non-volatile memory of a mobile equipment, or a non-volatile memory of the terminal device.

Embodiments of this application provide a method and an apparatus for processing a non-access stratum context, to resolve a problem that signaling overheads are increased because a NAS security context stored in a terminal device is inconsistent with a NAS security context stored in a PLMN.

To achieve the foregoing objectives, the following technical solutions are used in embodiments of this application.

According to a first aspect, a method for processing a non-access stratum context is provided. The method includes: A terminal device sends a first registration request message to a first public land mobile network PLMN. The terminal device receives a registration accept message from the first PLMN. When the terminal device deregisters from the first PLMN over a first access network, the terminal device stores, in a storage medium of the terminal device, a first PLMN identifier of the first PLMN and a first NAS security context established by the terminal device with the first PLMN.

In a conventional technology, a terminal device stores a NAS security context based on a type of an access network. However, when the terminal device does not store a PLMN identifier, a NAS security context that is stored in a file of a type of an access network to be registered may not be a NAS security context of a PLMN to be registered. In other words, the NAS security context selected by the terminal device is inconsistent with the NAS security context that is of the terminal device and that is stored in the PLMN. Therefore, in this application, when storing the first NAS security context, the terminal device may also store the first PLMN identifier of the first PLMN that establishes the first NAS security context. In this way, when registering to the first PLMN again, the terminal device may select, based on the identifier of the first PLMN, the NAS security context established with the first PLMN to protect a second registration request message. When the first PLMN receives the second registration request message, the first PLMN may obtain a NAS security context that is stored on a network side and that is established with the terminal device, to process the registration request message sent by the terminal device. In this way, a primary authentication process initiated when the NAS security context stored in the PLMN is inconsistent with the NAS security context used by the terminal device to protect the second registration request message can be avoided, thereby avoiding additional signaling overheads. In addition, in the conventional technology, additional signaling overheads further have large impact on some IoT devices. In this application, impact on the IoT device can be reduced while the primary authentication is avoided. In addition, in the conventional technology, after performing the primary authentication, a PLMN further generates a new key, and the PLMN further needs to activate the new key on a connection to an access network, and further needs to generate and activate, based on the new key, a new key for protecting user data. This affects service continuity. However, in this application, when the primary authentication is avoided, the PLMN does not need to activate the new key, and the service continuity is not affected because the new key does not need to be generated.

In a possible design, after the terminal device deregisters from the first PLMN over the first access network, the method further includes: If the terminal device intends to register to the first PLMN again over the first access network, before the terminal device sends the second registration request message to the first PLMN, the terminal device determines, based on the first PLMN identifier, the first NAS security context established by the terminal device with the first PLMN. The terminal device protects the second registration request message by using the first NAS security context. The terminal device sends the second registration request message protected by using the first NAS security context to the first PLMN over the first access network. In other words, the terminal device may determine, based on the first PLMN identifier, the NAS security context of the first PLMN to which the terminal device intends to register and the terminal device, to ensure that the NAS security context used when the terminal device sends the second registration request message is consistent with the NAS security context stored on the PLMN side.

In a possible design, that the terminal device stores, in a storage medium of the terminal device, a first PLMN identifier of the first PLMN and a first NAS security context established by the terminal device with the first PLMN includes: If a USIM of the terminal device supports storage of a registration management parameter, the terminal device stores the first NAS security context and the first PLMN identifier on the USIM. If a USIM does not support storage of a registration management parameter, the terminal device stores the first NAS security context and the first PLMN identifier in a non-volatile storage medium of the terminal device. Herein, data is preferentially stored on the USIM because if the USIM card is removed from the terminal device and inserted into another new terminal device, the new terminal device can still use the data stored on the USIM.

In a possible design, the method further includes: The terminal device sets the first NAS security context and the first PLMN identifier to valid. To be specific, each time the terminal device stores a new first NAS security context, the newly stored first NAS security context may be set to valid, and the NAS security context that is set to valid may be used in a subsequent registration process.

In a possible design, that the terminal device stores, in a storage medium of the terminal device, a first PLMN identifier of the first PLMN and a first NAS security context established by the terminal device with the first PLMN includes: If the storage medium of the terminal device does not store a NAS security context established by the terminal device with the first PLMN, the terminal device stores a first NAS security file and the first PLMN identifier in the storage medium of the terminal device. If the storage medium of the terminal device already stores a NAS security context established by the terminal device with the first PLMN, the terminal device replaces the stored NAS security context with the first NAS security context. In this case, it may be understood that in the storage medium, each PLMN corresponds to one PLMN identifier, and each PLMN identifier corresponds to one file used to store a NAS security context of the PLMN. The file may include NAS security contexts established by the terminal device with the PLMN by using a plurality of access network types. For example, a file that corresponds to the first PLMN identifier stores a 3GPP NAS security context and a non-3GPP NAS security context of the first PLMN. In this way, when the terminal device intends to register to the first PLMN, the terminal device may select the first NAS security context from the file that corresponds to the first PLMN identifier to protect the second registration request message, so that the first NAS security context selected by the terminal device is consistent with the NAS security context stored on the first PLMN side, and this can avoid the primary authentication initiated by the PLMN when the first NAS security context selected by the terminal device is inconsistent with the NAS security context stored on the first PLMN side.

In a possible design, that the terminal device stores, in a storage medium of the terminal device, a first PLMN identifier of the first PLMN and a first NAS security context established by the terminal device with the first PLMN includes: If the storage medium of the terminal device does not store a NAS security context that corresponds to the first access network, the terminal device stores the first NAS security context and the first PLMN identifier in the storage medium of the terminal device. In this way, when the terminal device intends to register to the first PLMN over the first access network, the terminal device may obtain the first NAS security context from the storage medium to protect the second registration request message, so that the first NAS security context selected by the terminal device is consistent with the NAS security context stored on the first PLMN side, and this can avoid the primary authentication initiated by the PLMN when the first NAS security context selected by the terminal device is inconsistent with the NAS security context stored on the first PLMN side.

If the storage medium of the terminal device already stores a NAS security context that corresponds to the first access network, the terminal device replaces the stored NAS security context that corresponds to the first access network with the first NAS security context, and stores the first PLMN identifier. In this way, when the terminal device intends to register to the first PLMN over the first access network, the terminal device may obtain the first NAS security context from the storage medium, to ensure that the NAS security context selected by the terminal device is consistent with the NAS security context stored in the first PLMN to which the terminal device intends to register.

In a possible design, that the terminal device stores, in a storage medium of the terminal device, a first PLMN identifier of the first PLMN and a first NAS security context established by the terminal device with the first PLMN includes: If the storage medium of the terminal device does not store a NAS security context of the terminal device with the first PLMN, the terminal device stores the first NAS security context and the first PLMN identifier in the storage medium of the terminal device. In this way, when the terminal device intends to register to the first PLMN over the first access network, the terminal device may obtain the first NAS security context from the storage medium to protect the second registration request message, so that the first NAS security context selected by the terminal device is consistent with the NAS security context stored on the first PLMN side, and this can avoid the primary authentication initiated by the PLMN when the first NAS security context selected by the terminal device is inconsistent with the NAS security context stored on the first PLMN side.

If the storage medium of the terminal device already stores the first PLMN identifier and a NAS security context of the terminal device with the first PLMN, the terminal device replaces the stored NAS security context of the terminal device with the first PLMN with the first NAS security context, and stores the first PLMN identifier. In this way, when the terminal device intends to register to the first PLMN over the first access network, the terminal device may obtain the first NAS security context from the storage medium, to ensure that the NAS security context selected by the terminal device is consistent with the NAS security context stored in the first PLMN to which the terminal device intends to register.

In a possible design, before the terminal device stores, in a storage medium of the terminal device, a first PLMN identifier of the first PLMN and a first NAS security context established by the terminal device with the first PLMN, the method further includes: The terminal device deregisters from the first PLMN over all access networks. In this way, when the terminal device establishes connections to the first PLMN over a plurality of access networks, if the terminal device still registers to the first PLMN over a second access network after the terminal device deregisters from the first PLMN over the first access network, the terminal device may first store, in a memory, the first NAS security context that needs to be stored when deregistering from the first PLMN over the first access network. When the terminal device also deregisters from the first PLMN over the second access network, the terminal device determines to deregister from the first PLMN over all access networks. In this case, the terminal device stores the first NAS security context and the first PLMN identifier in the storage medium, and stores a security context that is established when registering to the first PLMN over the second access network and the first PLMN identifier in the storage medium. In this way, a quantity of times that the terminal device accesses the storage medium and a quantity of times that a stored NAS security context is updated can be reduced.

In a possible design, the method further includes: The terminal device stores first time information, where the first time information is a moment at which the terminal device last uses the first NAS security context, a moment at which the terminal device deregisters from the first PLMN, a moment at which the terminal device stores the first NAS security context, or a validity period of the first NAS security context. In this way, when selecting a NAS security context, the terminal device may determine, based on the first time information, whether the first NAS security context is recently used, whether the first NAS security context is a context that is most recently deregistered from the first PLMN, whether the first NAS context is a most recently stored context, or whether the first NAS context is still in the validity period. It may also be understood that the terminal device may determine, based on the first time information, whether to select the first NAS security context, so that when selecting a NAS security context that corresponds to the first PLMN identifier, the terminal device may select a latest NAS security context that corresponds to the first PLMN identifier, and when the terminal device registers to the first PLMN again, the NAS security context selected by the terminal device is consistent with the security context stored in the first PLMN.

In a possible design, the method further includes: The terminal device determines, based on the first time information, that the first NAS security context is invalid. The terminal device deletes the first NAS security context stored in the storage medium of the terminal device or sets the first NAS security context to invalid. For example, the first NAS security context is stored for a long time but is not used. In this case, the first NAS security context may be deleted or set to invalid. The first NAS security context set to invalid is replaced with a new NAS security context to be stored. In this way, storage space of the storage medium can be more effectively used.

In a possible design, the method further includes: The terminal device deletes the first PLMN identifier from the storage medium of the terminal device or sets the first PLMN identifier to invalid. For example, the terminal device determines, based on the first time information, that the first PLMN identifier is stored for a long time but is not used. In this case, the first PLMN identifier that corresponds to the first NAS security context may also be deleted or set to invalid. The first PLMN identifier set to invalid is replaced with a new PLMN identifier to be stored. In this way, the storage space of the storage medium can be more effectively used.

That the terminal device determines, based on the first time information, that the first NAS security context is invalid may include: If the first time information is the moment at which the terminal device last uses the first NAS security context, the moment at which the terminal device deregisters from the first PLMN, or the moment at which the terminal device stores the first NAS security context, the terminal device determines that the first NAS security context is invalid after a period of time after the moment indicated by the first time information. If the first time information is the validity period of the first NAS security context, the terminal device determines, after the validity period of the first NAS security context, that the first NAS security context is invalid.

In a possible design, the method further includes: The terminal device stores an identifier of the first access network in the storage medium of the terminal device. To be specific, when storing the first NAS security context and the first PLMN identifier, the terminal device may further store the corresponding identifier of the first access network. In this way, when the terminal device re-registers to the first PLMN over the first access network, the terminal device may select, based on the first PLMN identifier and the identifier of the first access network, the first NAS security context that corresponds to the first access network and the first PLMN. In this way, while the first NAS security context selected by the terminal device is consistent with the NAS security context stored in the first PLMN, a speed of selecting the first NAS security context by the terminal can be further improved.

In a possible design, after sending the first registration request message to the first public land mobile network PLMN, the terminal device receives a first GUTI allocated by the first PLMN. The first GUTI is used to identify the terminal device. The terminal device stores the first GUTI in the storage medium of the terminal device. Specifically, it may be understood that, before the terminal device deregisters from the first PLMN over the first access network, the method further includes: The terminal device receives the first globally unique temporary user equipment identity GUTI allocated by the first PLMN. The first GUTI is used to identify the terminal device. The first GUTI includes the first PLMN identifier. If the storage medium of the terminal device already stores a second GUTI, the terminal device deletes the second GUTI and stores the first GUTI, or replaces the second GUTI with the first GUTI. If the storage medium of the terminal device does not store a second GUTI, the terminal device stores the first GUTI. The second GUTI is sent to the terminal device before the first PLMN allocates the first GUTI, and the second GUTI includes the first PLMN identifier.

In the conventional technology, the GUTI is stored in different files based on different access networks. When the terminal device registers to the first PLMN over the second access network, the first PLMN allocates a GUTI-2 (the second GUTI) to the terminal device. After the terminal device deregisters from the first PLMN, the terminal device stores the GUTI-2 in a file used to store location information or a GUTI that corresponds to the second access network. Then, when the terminal device registers to the first PLMN over the first access network, the first PLMN allocates a GUTI-1 (the first GUTI) to the terminal device. In this case, the terminal device stores the GUTI-1 in a file used to store location information or a GUTI that corresponds to the first access network. However, the file used to store the location information or the GUTI that corresponds to the first access network stores the GUTI-1 newly allocated to the terminal device. When the terminal device registers to the first PLMN over the second access network again, the terminal device may select a GUTI that is not the GUTI newly allocated, that is, the stored GUTI-2 is selected. However, the first PLMN cannot identify the GUTI-2. Therefore, the first PLMN initiates the primary authentication. However, in this application, the terminal device may delete the previously stored GUTI-2 allocated by the first PLMN or replace the GUTI-2 with the GUTI-1 newly allocated by the first PLMN. In this way, when registering to the first PLMN over the second access network again, the terminal device selects the GUTI-1 and includes the GUTI-1 in the registration request message. The GUTI-1 is the same as the GUTI-1 that is newly allocated to the terminal device and that is stored in the first PLMN, to avoid that the first PLMN cannot identify a GUTI in a registration request message and perform the primary authentication in the conventional technology.

In a possible design, after the terminal device sends the first registration request message to the first public land mobile network PLMN, the method further includes: The terminal device receives a second PLMN identifier of a second PLMN equivalent to the first PLMN from the first PLMN. The terminal device stores the second PLMN identifier in the storage medium of the terminal device.

In the conventional technology, the terminal device does not store an equivalent PLMN identifier of an equivalent PLMN. Therefore, the terminal device cannot determine whether a GUTI is allocated by an equivalent PLMN of a PLMN to which the terminal device intends to register, the terminal device cannot select a GUTI allocated by the equivalent PLMN, and a PLMN cannot obtain a context of the terminal device from the equivalent PLMN. However, in this application, the second PLMN identifier of the second PLMN equivalent to the first PLMN may be stored in the storage medium. In this case, when the second PLMN used as the equivalent PLMN allocates a GUTI, the terminal device may include the GUTI allocated by the second PLMN used as the equivalent PLMN in a registration request message. In this way, the first PLMN may obtain a context of the terminal device from the second PLMN based on the GUTI allocated by the equivalent PLMN, so that a case in which the first PLMN cannot obtain the context from the equivalent PLMN can be avoided, and the first PLMN does not need to initiate the primary authentication.

In a possible design, after the terminal device deregisters from the first PLMN over the first access network, the method further includes: When the terminal device intends to register to the first PLMN again, the terminal device obtains, based on the stored second PLMN identifier, a third GUTI allocated by the second PLMN. The terminal device includes the third GUTI in a third registration request message. The terminal device sends the third registration request message to the first PLMN. The third GUTI herein is understood as a GUTI allocated by an equivalent PLMN. When the terminal device sends the third registration request message carrying the third GUTI to the first PLMN, the first PLMN may obtain the context of the terminal device from the second PLMN based on the GUTI (namely, the third GUTI) allocated by the equivalent PLMN (the second PLMN), so that the case in which the first PLMN cannot obtain the context from the equivalent PLMN can be avoided, and the first PLMN does not need to initiate the primary authentication.

In some embodiments, before the terminal device stores the first GUTI in the storage medium of the terminal device, the method further includes: The terminal device determines whether the terminal device deregisters from the first PLMN over all access networks. If determining that the terminal device deregisters from the first PLMN over all access networks, the terminal device determines to store the first GUTI in the storage medium of the terminal device. Similar to a principle in which the terminal device stores the first PLMN identifier only after the terminal device deregisters over all access networks, in this application, the first GUTI can be stored after the terminal device deregisters from the first PLMN over all the access networks. In this way, a quantity of times that the terminal device updates a GUTI in the storage medium can be reduced. Otherwise, the terminal device needs to update the GUTI in the storage medium each time the first PLMN allocates a new GUTI.

In some embodiments, that the terminal device stores the first GUTI in the storage medium of the terminal device includes: When the terminal device determines that the terminal device has stored, in a file used to store the second access network, the second GUTI allocated by the first PLMN, and the second GUTI is allocated when the terminal device registers to the first PLMN over the second access network, the terminal device deletes the second GUTI and/or stores the first GUTI in the file used to store the second access network. In this way, a GUTI that is stored in the terminal device and allocated by the first PLMN is the latest GUTI, and is consistent with a latest GUTI stored on the first PLMN side.

In some embodiments, that the terminal device stores the first GUTI in the storage medium of the terminal device further includes: The terminal device further stores second time information in the storage medium of the terminal device. The second time information is a moment at which the first PLMN allocates the first GUTI, or a moment at which the terminal device stores the first GUTI, or a moment at which the terminal device or the first PLMN last uses the first GUTI. The second time information is used by the terminal device when registering to the first PLMN. The terminal device selects, based on the second time information, a GUTI newly allocated by the first PLMN, a GUTI that is allocated by the first PLMN and that is recently used by the terminal device or the first PLMN, or a GUTI that is allocated by the first PLMN and that is recently stored by the terminal device, and includes the selected GUTI in a registration request message sent by the terminal device to the first PLMN. In other words, the terminal device may select, based on the second time information, a recently used GUTI associated with the first PLMN, and the first PLMN also stores a latest GUTI newly allocated to the terminal device, so that the GUTI in the registration request message sent by the terminal device can be identified by the first PLMN, to avoid that the first PLMN initiates the primary authentication because the first PLMN cannot identify the GUTI in the registration request message.

In some embodiments, that the terminal device stores the first GUTI in the storage medium of the terminal device includes: The terminal device determines a fourth GUTI on the terminal device. The terminal device deletes the fourth GUTI and/or stores the first GUTI in a file storing the fourth GUTI. The fourth GUTI is an earliest GUTI stored in the storage medium of the terminal device. The earliest stored GUTI may be different from the GUTI newly allocated by the first PLMN to the terminal device. Therefore, the terminal device may replace the earliest allocated fourth GUTI with the newly allocated first GUTI, so that the GUTI of the terminal device is consistent with the GUTI newly allocated by the first PLMN to the terminal device, to avoid that the first PLMN initiates the primary authentication because the first PLMN cannot identify the GUTI in the registration request message.

In some embodiments, before the terminal device sends the second registration request message to the first PLMN, the method further includes: The terminal device sequentially reads multiple files storing GUTIs, and when a read GUTI is allocated by the first PLMN, the terminal device includes the GUTI in the second registration request message. It may be understood that when the read GUTI is associated with the first PLMN identifier, the terminal device includes the GUTI in the second registration request message.

In a possible design, that the terminal device stores, in a storage medium of the terminal device, a first PLMN identifier of the first PLMN and a first NAS security context established by the terminal device with the first PLMN includes: Before the first NAS security context and the first PLMN identifier are stored, if a file used to store a NAS security context of the first access network stores a NAS security context and a PLMN identifier, or a file used to store a NAS security context that corresponds to the first access network already stores a NAS security context and a PLMN identifier but the NAS security context and the PLMN identifier are set to invalid, the terminal device replaces the stored NAS security context with the first NAS security context, and replaces the stored PLMN identifier with the first PLMN identifier. This design may be understood as storing the first PLMN identifier and the first NAS security context based on a type of an access network. Each file of a type of an access network stores an identifier of a PLMN and a NAS security context of the type of the access network.

In a possible design, that the terminal device stores, in a storage medium of the terminal device, a first PLMN identifier of the first PLMN and a first NAS security context established by the terminal device with the first PLMN includes: If a file used to store a NAS security context of the first access network does not store a NAS security context of the first PLMN and the terminal device before the first NAS security context and the first PLMN identifier are stored, the terminal device stores the first NAS security file and the first PLMN identifier in a first file. In this manner, it may be understood that when the first PLMN identifier and the first NAS security context are stored based on the type of the access network, a file of an access network may include multiple PLMN identifiers and corresponding NAS security files.

Before the first NAS security context and the first PLMN identifier are stored, if the file already stores a NAS security context of the first PLMN and the terminal device with the first PLMN identifier, or the first PLMN identifier of the first PLMN and a NAS security context that are stored in the file are set to invalid, the terminal device replaces the stored NAS security context of the first PLMN and the terminal device with the first NAS security context. In this manner, it may be understood that when the first PLMN identifier and the first NAS security context are stored based on the type of the access network, a file of an access network may include one PLMN identifier and one NAS security file.

In a possible design, that the terminal device stores, in a storage medium of the terminal device, a first PLMN identifier of the first PLMN and a first NAS security context established by the terminal device with the first PLMN includes: Before the first NAS security context and the first PLMN identifier are stored, if a file used to store a NAS security context of the first PLMN does not store a NAS security context or the NAS security context that corresponds to the first access network, the terminal device stores the first NAS security file and the first PLMN identifier in the file. Before the first NAS security context and the first PLMN identifier are stored, if a file used to store a NAS security context of the first PLMN already stores a NAS security context or the NAS security context that corresponds to the first access network, or a NAS security context or the NAS security context that corresponds to the first access network stored in a file used to store a NAS security context of the first PLMN are set to invalid, the terminal device replaces the NAS security context stored in the file with the first NAS security context. Alternatively, the stored NAS security context that corresponds to the first access network is replaced with the first NAS security context. Optionally, the terminal device stores the first PLMN identifier. In this manner, each PLMN has a file used to store a NAS security context of the PLMN, and the file may include the security context of the first access network and a security context of another access network. For example, the first access network corresponds to a 3GPP NAS security context, and the another access network corresponds to a non-3GPP NAS security context.

In a possible design, that the terminal device stores, in a storage medium of the terminal device, a first PLMN identifier of the first PLMN and a first NAS security context established by the terminal device with the first PLMN includes: A file used by the terminal device to store the NAS security context of the first access network of the first PLMN stores the first NAS security context and the first PLMN identifier. In this manner, each PLMN may have two files for storing NAS security contexts of the PLMN, for example, one file for storing a 3GPP NAS security context of the PLMN, and the other file for storing a non-3GPP NAS security context of the PLMN.

According to a second aspect, a method for processing a non-access stratum context is provided. The method includes: Before a terminal device sends a registration request message to a first public land mobile network PLMN over a first access network, the terminal device obtains, based on a first PLMN identifier of the first PLMN from a storage medium of the terminal device, a first NAS security context established by the terminal device with the first PLMN. The terminal device protects the registration request message by using the first NAS security context. The terminal device sends the registration request message protected by using the first NAS security context to the first PLMN over the first access network.

Similar to the first aspect, when storing the first NAS security context, the terminal device may also store the first PLMN identifier of the first PLMN that establishes the first NAS security context. In this way, when registering to the first PLMN again, the terminal device may select, based on the identifier of the first PLMN, a NAS security context established with the first PLMN to protect the registration request message. When the first PLMN receives the registration request message, the first PLMN may process, based on a NAS security context that is stored by the first PLMN and that is established with the terminal device, the registration request message sent by the terminal device. In this way, a primary authentication process initiated when the NAS security context stored in the PLMN is inconsistent with the NAS security context used by the terminal device to protect the registration request message can be avoided, thereby avoiding additional signaling overheads. In addition, impact on an IoT device can be reduced while the primary authentication is avoided. In addition, when the primary authentication is avoided, the PLMN does not need to activate a new key, and service continuity is not affected because a new key does not need to be generated.

In a possible design, that the terminal device obtains, based on a first PLMN identifier of the first PLMN from a storage medium of the terminal device, a first NAS security context established by the terminal device with the first PLMN includes: If a USIM of the terminal device supports storage of a registration management parameter, the terminal device reads the first NAS security context from the UISM based on the first PLMN identifier. If a USIM does not support storage of a registration management parameter, the terminal device reads the first NAS security context from a non-volatile storage medium of the terminal device based on the identifier of the first PLMN. That is, the terminal device preferentially attempts to read the NAS security context from the USIM based on the first PLMN identifier. If the terminal device fails to read the NAS security context from the USIM, the terminal device reads, from the non-volatile storage medium, the first NAS security context that corresponds to the first PLMN identifier. This is because if the USIM card is removed from the terminal device and inserted into another new terminal device, the new terminal device can still use data stored on the USIM.

In a possible design, that the terminal device obtains, based on a first PLMN identifier of the first PLMN from a storage medium of the terminal device, a first NAS security context established by the terminal device with the first PLMN includes: the terminal device obtains, based on the first PLMN identifier, the first NAS security context from a file that is in the storage medium of the terminal device and that is used to store a NAS security context that corresponds to the first access network; or includes: the terminal device obtains, based on the first PLMN identifier, the first NAS security context from a file that is used to store a NAS security context of the terminal device with the first PLMN; or includes: the terminal device obtains, based on the first PLMN identifier, the first NAS security context from a file that is used to store a NAS security context that is of the terminal device with the first PLMN and that corresponds to the first access network. In this way, the first NAS security context determined by the terminal device can be consistent with the NAS security context stored in the first PLMN to which the terminal device intends to register, so that the first PLMN does not need to perform the primary authentication.

In a possible design, before the terminal device sends the registration request message to the first PLMN, the method further includes: The terminal device obtains a second PLMN identifier of a second PLMN equivalent to the first PLMN from the storage medium of the terminal device. The terminal device obtains, based on the second PLMN identifier from the storage medium of the terminal device, a second globally unique temporary user equipment identity GUTI allocated by the second PLMN. The terminal device includes the second GUTI in the registration request message.

The storage medium of the terminal device stores the second PLMN identifier of the second PLMN equivalent to the first PLMN. In this case, when the second PLMN used as the equivalent PLMN allocates the second GUTI, the terminal device may include the second GUTI allocated by the second PLMN used as the equivalent PLMN in a registration request message. In this way, the first PLMN may obtain a context of the terminal device from the second PLMN based on the second GUTI of the equivalent PLMN, so that a case in which the first PLMN cannot obtain the context from the equivalent PLMN can be avoided, and the first PLMN does not need to initiate the primary authentication.

In a possible design, before the terminal device sends the registration request message to the first PLMN, the method further includes: The terminal device obtains, based on the first PLMN identifier from the storage medium of the terminal device, a first GUTI allocated by the first PLMN. The terminal device includes the first GUTI in the registration request message. In this case, the first PLMN may obtain, based on the first GUTI, the NAS security context established by the first PLMN and the terminal device.

According to a third aspect, a terminal device is provided, including the following modules. A sending module is configured to send a first registration request message to a first public land mobile network PLMN. A receiving module is configured to receive a registration accept message from the first PLMN. A processing module is configured to: when the terminal device deregisters from the first PLMN over a first access network, store, in a storage medium of the terminal device, a first PLMN identifier of the first PLMN and a first NAS security context established by the terminal device with the first PLMN.

In a possible design, after the terminal device deregisters from the first PLMN over the first access network, the processing module is further configured to: before the sending module is configured to send a second registration request message to the first PLMN, determine, based on the first PLMN identifier, the first NAS security context established by the terminal device with the first PLMN; and protect the second registration request message by using the first NAS security context. The sending module is further configured to send, to the first PLMN over the first access network, the second registration request message protected by using the first NAS security context.

In a possible design, the processing module is configured to: if a universal subscriber identity module USIM of the terminal device supports storage of a registration management parameter, store the first NAS security context and the first PLMN identifier on the USIM; or if a USIM does not support storage of a registration management parameter, store the first NAS security context and the first PLMN identifier in a non-volatile storage medium of the terminal device.

In a possible design, the processing module is further configured to set the first NAS security context to valid.

In a possible design, the processing module is configured to: if the storage medium of the terminal device does not store a NAS security context established by the terminal device with the first PLMN, store a first NAS security file and the first PLMN identifier in the storage medium of the terminal device; or if the storage medium of the terminal device already stores the first PLMN identifier and a NAS security context established by the terminal device with the first PLMN, replace the stored NAS security context with the first NAS security context.

In a possible design, the processing module is configured to: if the storage medium of the terminal device does not store a NAS security context that corresponds to the first access network, store the first NAS security context and replace the context with the first NAS security context in the storage medium of the terminal device, and store the first PLMN identifier.

In a possible design, the processing module is further configured to deregister from the first PLMN over all access networks.

In a possible design, the processing module is further configured to store first time information, where the first time information is a moment at which the terminal device last uses the first NAS security context, a moment at which the terminal device deregisters from the first PLMN, a moment at which the terminal device stores the first NAS security context, or a validity period of the first NAS security context.

In a possible design, the processing module is further configured to: determine, based on the first time information, that the first NAS security context is invalid; and delete the first NAS security context stored in the storage medium of the terminal device or set the first NAS security context to invalid.

In a possible design, the processing module is further configured to delete the first PLMN identifier from the storage medium of the terminal device or set the first PLMN identifier to invalid.

In a possible design, the processing module is further configured to store an identifier of the first access network in the storage medium of the terminal device.

In a possible design, the receiving module is further configured to receive a first globally unique temporary user equipment identity GUTI allocated by the first PLMN, where the first GUTI is used to identify the terminal device, and the first GUTI includes the first PLMN identifier. The processing module is further configured to: if the storage medium of the terminal device already stores a second GUTI, delete the second GUTI and store the first GUTI, or replace the second GUTI with the first GUTI; or if the storage medium of the terminal device does not store a second GUTI, store the first GUTI. The second GUTI is sent to the terminal device before the first PLMN allocates the first GUTI, and the second GUTI includes the first PLMN identifier.

In a possible design, the receiving module is further configured to receive a second PLMN identifier of a second PLMN equivalent to the first PLMN from the first PLMN. The processing module is further configured to store the second PLMN identifier in the storage medium of the terminal device.

In a possible design, the processing module is further configured to obtain, based on the second PLMN identifier, a third GUTI allocated by the second PLMN; and include, by the terminal device, the third GUTI in a third registration request message. The sending module is further configured to send the third registration request message to the first PLMN.

According to a fourth aspect, a terminal device is provided, including the following modules. A processing module is configured to: before a terminal device sends a registration request message to a first public land mobile network PLMN over a first access network, obtain, based on a first PLMN identifier of the first PLMN from a storage medium of the terminal device, a first NAS security context established by the terminal device with the first PLMN; and protect the registration request message by using the first NAS security context. A sending module is configured to send, to the first PLMN over the first access network, the registration request message protected by using the first NAS security context.

In a possible design, the processing module is configured to: if a universal subscriber identity module USIM of the terminal device supports storage of a registration management parameter, read the first NAS security context from the UISM based on the first PLMN identifier; or if a USIM does not support storage of a registration management parameter, read the first NAS security context from a non-volatile storage medium of the terminal device based on the identifier of the first PLMN.

In a possible design, the processing module is configured to obtain, based on the first PLMN identifier and an identifier of the first access network, the first NAS security context that corresponds to the first access network and that is established by the terminal device with the first PLMN from the storage medium of the terminal device.

In a possible design, the processing module is configured to: obtain, from the storage medium of the terminal device, a second PLMN identifier of a second PLMN equivalent to the first PLMN; obtain, based on the second PLMN identifier from the storage medium of the terminal device, a second globally unique temporary user equipment identity GUTI allocated by the second PLMN; and include the second GUTI in the registration request message.

In a possible design, the processing module is further configured to: obtain, based on the first PLMN identifier from the storage medium of the terminal device, a first GUTI allocated by the first PLMN; and include the first GUTI in the registration request message.

According to a fifth aspect, an embodiment of this application provides a computer-readable storage medium, including computer instructions. When the computer instructions are run on an electronic device, the electronic device is enabled to perform the method for processing a non-access stratum context in any one of the foregoing aspects and the possible implementations.

According to a sixth aspect, an embodiment of this application provides a computer program product. When the computer program product is run on a computer, an electronic device is enabled to perform the method for processing a non-access stratum context in any one of the foregoing aspects and the possible implementations.

According to a seventh aspect, an embodiment of this application provides a system. The system may include the terminal device and the PLMN in any one of the possible implementations of the foregoing aspects. The terminal device and the PLMN may perform the method for processing a non-access stratum context in any one of the foregoing aspects and the possible implementations.

### BRIEF DESCRIPTION OF DRAWINGS

FIG. 1 is a schematic diagram of a scenario in which a terminal device registers over different access networks according to an embodiment of this application;
FIG. 2 is a schematic diagram of a network architecture according to an embodiment of this application;
FIG. 3 is a schematic flowchart of a method for processing a non-access stratum context according to an embodiment of this application;
FIG. 4 is a schematic flowchart of a method for processing a non-access stratum context according to an embodiment of this application;
FIG. 5 is a schematic flowchart of a method for processing a non-access stratum context according to an embodiment of this application;
FIG. 6 is a schematic diagram of a structure of a terminal device according to an embodiment of this application; and
FIG. 7 is a schematic diagram of a structure of a terminal device according to an embodiment of this application.

### DESCRIPTION OF EMBODIMENTS

For ease of understanding, some concepts related to embodiments of this application are described for reference by using examples. Details are shown as follows.

3GPP access network: includes a next generation radio access network (next generation radio access network, NG-RAN), where the NG-RAN includes a next generation NodeB (NR NodeB, gNB) and a next generation evolved NodeB (ng-eNB: Next Generation Evolved NodeB).

Non-3GPP access network: for example, a wireless local area network (wireless local area network, WLAN) access network is the non-3GPP access network, and the non-3GPP access network may include an untrusted (Untrusted) non-3GPP access network, a trusted (Trusted) non-3GPP access network, and a wireline access network (wireline access network).

### Storage and processing of a security context in a scenario in which a terminal device registers over different access networks

There are two scenarios in which the terminal device registers over different access networks.

Scenario 1 of registration over different access networks: A terminal device registers to a same PLMN over a 3GPP access network and a non-3GPP access network, and a same access and mobility management node (for example, an AMF (access and mobility management function)) of the PLMN serves the terminal device. The terminal device establishes a non-3 GPP NAS connection and a 3GPP NAS connection with the PLMN (in this application, the PLMN may be an access and mobility management node). As shown in (a) in FIG. 1, a terminal device registers to a PLMN over a 3GPP access network, and a 3GPP NAS connection is established between the terminal device and the PLMN. The terminal device registers to the PLMN over a non-3 GPP access network, and a non-3 GPP NAS connection is established between the terminal device and the PLMN.

Scenario 2 of registration over different access networks: A terminal device registers to two different PLMNs respectively over a 3GPP access network and a non-3GPP access network, and the terminal device establishes a NAS connection with each of the two PLMNs (or two access and mobility management nodes). As shown in (b) in FIG. 1, a terminal device registers to a PLMN-A over a 3GPP access network, and a 3GPP NAS connection is established between the terminal device and the PLMN-A. The terminal device registers to a PLMN-B over a non-3GPP access network, and a non-3GPP NAS connection is established between the terminal device and the PLMN-B.

In Scenario 1 of registration over different access networks, a NAS security context established by the terminal device with the PLMN may include:
a key Kamf and a key identifier ngKSI of the key Kamf, where the key Kamf is used to generate a NAS cipher key and a NAS integrity key, the NAS cipher key is used to cipher a NAS message, and the NAS integrity key is used to protect integrity of the NAS message;
selected NAS cipher and integrity algorithms (or algorithm identifiers); and
an identifier of the 3GPP NAS connection and NAS counts that are of the 3GPP NAS connection and that include an uplink NAS count and a downlink NAS count, and/or an identifier of the non-3GPP NAS connection and NAS counts that are of the non-3GPP NAS connection and that include an uplink NAS count and a downlink NAS count.

It should be noted that the 3GPP NAS connection and the non-3GPP NAS connection use the same key Kamf, the same key identifier ngKSI of the key Kamf, and the same selected NAS cipher and integrity algorithms (or algorithm identifiers), but use different NAS connection identifiers and NAS counts. To be specific, the 3GPP NAS connection uses the identifier of the 3GPP NAS connection and the NAS counts of the 3GPP NAS connection; and the non-3GPP NAS connection uses the identifier of the non-3GPP NAS connection and the NAS counts of the non-3GPP NAS connection.

In Scenario 2 of registration over different access networks, the terminal device may respectively establish NAS security contexts with the two PLMNs (for example, the PLMN-A and the PLMN-B shown in (b) in FIG. 1), namely, a 3GPP NAS security context (including a key Kamf and a key identifier ngKSI of the key Kamf, selected NAS cipher and integrity algorithms (or algorithm identifiers), an identifier of the 3GPP NAS connection and NAS counts of the 3GPP NAS connection) and a non-3GPP NAS security context (including the key Kamf, the key identifier ngKSI of the key Kamf, the selected NAS cipher and integrity algorithms (or algorithm identifiers), an identifier of the non-3GPP NAS connection and NAS counts of the non-3GPP NAS connection).

When a terminal device deregisters from a PLMN, both the terminal device and the PLMN need to store a current NAS security context (current NAS security context) of the terminal device. (The current NAS security context refers to a recently activated NAS security context.)

A specification on NAS security context storage on the terminal device may be specifically as follows.

If a universal subscription identity module (UMTS (universal mobile telecommunications system, universal mobile telecommunications system) subscriber identity module, USIM) of the terminal device supports storage of a registration management parameter, the terminal device stores the current NAS security context on the USIM, marks the NAS security context stored on the USIM as valid (valid), and does not store any NAS security context in a non-volatile memory (non-volatile memory) of a mobile equipment (mobile equipment, ME). Both the USIM and the ME are a part of the terminal device.

If a USIM does not support storage of a registration management parameter, the NAS security context is stored in a non-volatile memory (non-volatile memory) of a mobile equipment, and the NAS security context stored in the non-volatile memory is marked as valid.

### Allocation of 5th generation mobile network-globally unique temporary UE identity (5th generation mobile networks-globally unique temporary UE Identity, 5G-GUTI)

When a terminal device registers to a PLMN over an access network, an access and mobility management node of the PLMN may allocate a GUTI to the terminal device, to identify the terminal device. The access and mobility management node of the PLMN and the terminal device store the GUTI. The GUTI includes a PLMN identifier (identifier, ID) used to identify the PLMN. The PLMN identifier included in the GUTI indicates that the GUTI is allocated by the PLMN. The GUTI is further used by a network side to obtain a context of the terminal device based on the GUTI. The context of the terminal device includes a NAS security context.

For a PLMN, the terminal device needs to store a latest GUTI allocated by the PLMN. For example, when the terminal device first accesses the PLMN over an access network 1, the PLMN may allocate a GUTI, for example, a GUTI-A1, to the terminal device. When the terminal device accesses the same PLMN over an access network 2, the PLMN may allocate a GUTI, for example, a GUTI-A2, to the terminal device. In this case, both the terminal device and the access and mobility management node of the PLMN need to store and use a newly allocated GUTI, namely, the GUTI-A2.

When the terminal device registers to a plurality of PLMNs, the terminal device needs to store a latest GUTI allocated by each PLMN. For example, when the terminal device first accesses a PLMN-A over an access network 1, the PLMN-A may allocate a GUTI, for example, a GUTI-A1, to the terminal device. When the terminal device accesses a PLMN-B over an access network 2, the PLMN-B may allocate a GUTI, for example, a GUTI-B1, to the terminal device. In this case, the terminal device needs to store the GUTI-A1 and the GUTI-A2.

A specification for storing the GUTI on the terminal device is specifically as follows.

If a USIM in the terminal device supports storage of a registration management parameter, the GUTI is stored on the USIM.

If a USIM in the terminal device does not support storage of a registration management parameter, the GUTI is stored in a non-volatile memory of a mobile equipment.

An implementation in which the terminal device stores the GUTI in the USIM or the non-volatile memory of the ME may be as follows: After receiving the GUTI allocated by the PLMN, the terminal device stores the GUTI; or the terminal device stores the GUTI when deregistering from the PLMN.

When the terminal device intends to register to the PLMN, the terminal device sends a registration request message to the PLMN, and the terminal device includes the GUTI in the registration request message. When the terminal device selects the included GUTI:

If the GUTI stored in the USIM or the non-volatile memory of the ME of the terminal device is allocated by the PLMN to which the terminal device intends to register, the terminal device selects the GUTI; otherwise, if all GUTIs stored in the USIM or the non-volatile memory of the ME of the terminal device are not allocated by the PLMN to which the terminal device intends to register, the terminal device selects a GUTI allocated by another PLMN.

If the GUTI stored in the USIM or the non-volatile memory of the ME of the terminal device is allocated by an equivalent PLMN of the PLMN to which the terminal device intends to register, the terminal device selects the GUTI to include in the registration request message; otherwise, if all GUTIs stored in the USIM or the non-volatile memory of the ME of the terminal device are not allocated by any equivalent PLMN of the PLMN, the terminal device selects a GUTI allocated by another PLMN.

### Specific implementation of processing and storing a NAS security context and a GUTI of a terminal device

When a USIM of the terminal device supports storage of a registration management parameter:

An EF_{5GS3GPPNSC} file on the USIM is used to store a 3GPP NAS security context including a key Kamf and a key identifier ngKSI of the key Kamf, a NAS count of a 3GPP NAS connection, a selected NAS integrity algorithm identifier, and a selected NAS cipher algorithm identifier.

An EF_{5GSN3GPPNSC} file on the USIM is used to store a non-3GPP NAS security context including the key Kamf and the key identifier ngKSI of the key Kamf, a NAS count of a non-3GPP NAS connection, the selected NAS integrity algorithm identifier, and the selected NAS cipher algorithm identifier.

When the terminal device registers to a same PLMN over two access networks, keys Kamf, key identifiers ngKSI of the keys Kamf, selected NAS integrity algorithm identifiers, and selected NAS cipher algorithm identifiers in the two files (EF_{5GS3GPPNSC} and EF_{5GSN3GPPNSC}) are the same, but NAS counts in the two files may be different. When the terminal device respectively registers to different PLMNs over two access networks, keys Kamf, key identifiers ngKSI of the keys Kamf, NAS counts, selected NAS integrity algorithm identifiers, and selected NAS cipher algorithm identifiers in the two files may all be different.

If the USIM of the terminal device supports the storage of the registration management parameter:

An EF_{5GS3GPPLOCI} file (the file is used to store location information of the 3GPP NAS connection) on the USIM of the terminal device stores a GUTI received on the 3GPP NAS connection.

An EF_{5GSN3GPPLOCI} file (the file is used to store location information of the non-3GPP NAS connection) on the USIM of the terminal device stores a GUTI received on the non-3GPP NAS connection.

However, based on the foregoing descriptions, when the terminal device registers to the PLMN, the following technical problems may occur.

**Technical problem 1: NAS security contexts stored on a terminal device side and a network side do not match.**

For example, in the following scenarios:
Step 11: A terminal device registers to a PLMN-A over an access network 1 and an access network 2. An access and mobility management node AMF 1 of the PLMN-A serves the terminal device.
Step 12: The terminal device deregisters from the PLMN-A over the access network 2.
Step 13: The terminal device registers to a PLMN-B over the access network 2, and then the terminal device deregisters from the PLMN-B over the access network 2.
Step 14: The terminal device registers to the PLMN-A over the access network 2.

In step 14, the terminal device sends a registration request (registration request, RR) message to the AMF 1 in the PLMN-A over the access network 2. The registration request message carries a GUTI, and is protected by using a NAS security context. However, the AMF 1 fails to verify the registration request message because NAS security contexts stored in the terminal device and the AMF 1 are different. The terminal device stores a NAS security context established when the terminal device registers to the PLMN-B over the access network 2, and the PLMN-A stores a NAS security context established when the terminal device registers to the PLMN-A over the access network 2.

In the following descriptions, an example in which an access network 2 is a non-3GPP access network and an access network 1 is a 3GPP access network is used for description.

Step 21: A terminal device registers to a PLMN-A over the access network 1 (for example, the 3GPP access network) and the access network 2 (for example, the non-3GPP access network), and then the terminal device deregisters from the PLMN-A over the access network 2.

After the terminal device registers to the PLMN-A over both the access network 1 and the access network 2, the PLMN-A (or an access and mobility management node of the PLMN-A) and the terminal device establish a NAS security context. On the terminal device, the NAS security context is stored in a memory. When the terminal device deregisters from the PLMN-A over the non-3GPP access network:
If a USIM of the terminal device supports storage of a registration management parameter, the terminal device stores a non-3GPP NAS security context in an EF_{5GSN3GPPNSC} file in the USIM.

If a USIM does not support storage of a registration management parameter, the terminal device stores a non-3GPP NAS security context in a non-volatile (non-volatile) memory of an ME.

The PLMN-A (that is, the access and mobility management node of the PLMN-A) stores NAS security contexts including a 3GPP NAS security context and the non-3GPP NAS security context.

Step 22: The terminal device registers to a PLMN-B over the non-3GPP access network, and then the terminal device deregisters from the PLMN-B over the non-3GPP access network.

After the terminal device registers to the PLMN-B over the non-3GPP access network, the terminal device and the PLMN-B establish a non-3GPP NAS security context.

Then, when the terminal device deregisters from the PLMN-B over the non-3GPP access network:
If the USIM of the terminal device supports the storage of the registration management parameter, the terminal device stores the non-3GPP NAS security context of the PLMN-B in the EF_{5CSN3GPPNSC} file in the USIM. In this case, the non-3 GPP NAS security context of the PLMN-A stored in the EF_{5GSN3GPPNSC} file is overwritten or deleted.

If the USIM of the terminal device does not support the storage of the registration management parameter, the terminal device stores the non-3 GPP NAS security context of the PLMN-B in the non-volatile memory of the ME. In this case, the non-3GPP NAS security context of the PLMN-A stored in the non-volatile memory of the ME may also be overwritten or deleted.

Step 23: The terminal device registers to the PLMN-A over the non-3GPP access network.

In this case, the terminal device sends a registration request message to the PLMN-A over the non-3GPP access network. Before sending the registration request message, the terminal device reads, based on the non-3GPP access network, a non-3 GPP NAS security context stored in the EF_{5GSN3GPPNSC} in the USIM or the non-volatile memory of the ME, where the NAS security context is established between the terminal device and the PLMN-B. The terminal device protects the registration request message by using the non-3GPP NAS security context of the PLMN-B.

However, after receiving the registration request message of the terminal device over the non-3GPP access network, the PLMN-A (or the access and mobility management node of the PLMN-A) verifies the RR by using the NAS security context (namely, the NAS security context established by the terminal device with the PLMN-A) stored in step 21. The terminal device uses the non-3GPP NAS security context of the terminal device and the PLMN-B to protect the registration request message, while the PLMN-A uses the non-3GPP NAS security context of the terminal device and the PLMN-A. As a result, the PLMN-A (or the access and mobility management node of the PLMN-A) fails to verify the RR message. The PLMN-A initiates primary authentication. Additional signaling overheads are caused by the primary authentication, and the additional signaling overheads have great impact on some internet of things (internet of things, IoT) devices. In addition, after performing the primary authentication, the PLMN-A generates a new key Kamf. The PLMN-A further needs to activate the new key Kamf on a 3GPP NAS connection, and further needs to generate and activate, based on the new key Kamf, a new key for protecting user data. This affects service continuity.

For another example, there is another scenario in which the PLMN-A fails to verify the RR message sent by the terminal device. For example, the terminal device first registers to the PLMN-A over the access network 1, and then deregisters from the PLMN-A. The terminal device then registers to the PLMN-B over the access network 1, and then deregisters from the PLMN-B. In this case, a storage medium of the terminal device stores a NAS security context of registering to the PLMN-B over the access network 1. If the terminal device re-registers to the PLMN-A over the access network 1, the PLMN-A initiates the primary authentication. This is because the PLMN-A still stores a NAS security context established when the terminal device registers to the PLMN-A over the access network 1.

In the foregoing scenarios, the PLMN-A fails to verify the registration request message of the terminal device because the NAS security context stored on the terminal device is inconsistent with the NAS security context stored on the PLMN, and this is because when the terminal device side stores NAS security contexts, the NAS security contexts can only be respectively stored for the 3GPP access network and the non-3GPP access network and do not include PLMN information.

**Technical problem 2:** A network side cannot obtain a context of a terminal device.

In the following scenario, a 3GPP access network is used as an example.

Step 31: A terminal device registers to a PLMN-A over the 3GPP access network. The PLMN-A allocates a GUTI, for example, denoted as a GUTI-1, to the terminal device. Then, the terminal device deregisters from the PLMN-A over the 3GPP access network.

The terminal device stores the GUTI-1 in a USIM (namely, an EF_{5GS3GPPLOCI} file) or a non-volatile memory of an ME.

Step 32: The terminal device registers to a PLMN-B over the 3GPP access network. The PLMN-B allocates a GUTI, for example, denoted as a GUTI-2, to the terminal device. Then, the terminal device deregisters from the PLMN-B over the 3GPP access network.

The terminal device stores the GUTI-2 in the USIM (namely, the EF_{5GS3GPPLOCI} file) or the non-volatile memory of the ME. In this case, the GUTI-1 allocated by the PLMN-A to the terminal device is already overwritten by the GUTI-2, or the GUTI-1 is deleted, and the GUTI-2 is stored.

Step 33: The terminal device registers to the PLMN-A over the 3GPP access network.

In this case, a GUTI obtained by the terminal device from the USIM (namely, the EF_{5GS3GPPLOCI}) or the non-volatile memory of the ME is the GUTI-2. The terminal device sends a registration request message carrying the GUTI-2 to the PLMN-A over the 3GPP access network. After receiving the registration request message, the PLMN-A (or an access and mobility management function of the PLMN-A) obtains a context of the terminal device based on the GUTI carried in the registration request message. However, the GUTI-2 in the registration request message is allocated by the PLMN-B, and the PLMN-A does not recognize the GUTI-2. As a result, the PLMN-A cannot obtain the context of the terminal device. Therefore, the PLMN-A can only initiate primary authentication, and then reestablish the context of the terminal device. This increases signaling overheads, and affects a speed at which the terminal device uses a service. Impact is great especially for some IoT devices.

It may be understood that, a reason why the PLMN-A cannot obtain the context of the terminal device is mainly that on the terminal device side, a GUTI is independently stored based on different access networks. In some scenarios, the GUTI may be lost.

The following scenario is used as an example.

Step 41: A terminal device registers to a PLMN-A over the 3GPP access network. The PLMN-A allocates a GUTI denoted as a GUTI-1 to the terminal device. The terminal device deregisters from the PLMN-A over the 3 GPP access network.

In this case, the terminal device stores the GUTI-1 in a USIM (specifically, an EF_{5GS3GPPLOCI} file) or a non-volatile memory of an ME.

Step 42: The terminal device registers to the PLMN-A over a non-3GPP access network. The PLMN-A allocates a GUTI denoted as a GUTI-2 to the terminal device. The terminal device deregisters from the PLMN-A over the non-3GPP access network.

In this case, the terminal device stores the GUTI-2 in the USIM (specifically, an EF_{5GSN3GPPLOCI} file) or the non-volatile memory of the ME. The GUTI-2 is a latest GUTI allocated by the PLMN-A to the terminal device. In this case, only the GUTI-2 is stored in the PLMN-A (or an access and mobility management device of the PLMN-A), and the GUTI-1 is deleted.

Step 43: The terminal device registers to the PLMN-A over the 3GPP access network.

During the registration, when the terminal device obtains a GUTI from the USIM, both the EF_{5GS3GPPLOCI} file and the EF_{5GSN3GPPLOCI} file store a GUTI allocated by the PLMN-A to the terminal device. However, the terminal device cannot determine a file in which a GUTI is the newly allocated GUTI. If the terminal device selects the GUTI-1, a registration request message sent by the terminal device to the PLMN-A carries the GUTI-1, but the PLMN-A stores the GUTI-2. The PLMN-A cannot determine a context of the terminal device based on the GUTI-1. As a result, the PLMN-A can only initiate primary authentication and establish the context of the terminal device. Such impact is similar to the impact described in the foregoing scenario. To be specific, the primary authentication causes additional signaling overheads, and the additional signaling overheads have large impact on some IoT devices. In addition, after performing the primary authentication, the PLMN-A generates a new key Kamf. The PLMN-A further needs to activate the new key Kamf on a 3GPP NAS connection, and further needs to generate and activate, based on the new key Kamf, a new key for protecting user data. This affects service continuity.

**Technical problem 3: A terminal device cannot select a GUTI allocated by an equivalent PLMN, and a network side cannot obtain a context of the terminal device from the equivalent network.**

When a terminal device intends to register to a PLMN, the terminal device sends a registration request message to the PLMN, and the terminal device includes a GUTI in the registration request message. An implementation in which the terminal device obtains the GUTI may be as follows.

If a GUTI stored in a USIM or a non-volatile memory of an ME of the terminal device is allocated by the PLMN to which the terminal device intends to register, the terminal device selects the GUTI; otherwise, if all stored GUTIs are not allocated by the PLMN, the following step is performed.

If a GUTI stored in a USIM or a non-volatile memory of an ME is allocated by an equivalent PLMN the PLMN to which the terminal device intends to register, the terminal device selects the GUTI; otherwise, if all stored GUTIs are not allocated by any equivalent PLMN of the PLMN, the following step is performed.

The terminal device selects a GUTI allocated by another PLMN.

When the GUTI selected by the terminal device is the GUTI allocated by the equivalent PLMN, after the PLMN receives a registration request message including the GUTI, the PLMN may obtain a context of the terminal device from the equivalent PLMN based on the GUTI.

However, when the terminal device deregisters from the PLMN, the terminal device does not store information about the equivalent PLMN. Therefore, whether a GUTI is allocated by the equivalent PLMN cannot be determined. As a result, the terminal device cannot select the GUTI allocated by the equivalent PLMN, and the network side cannot obtain the context of the terminal device from the equivalent PLMN. The network side can only perform primary authentication and establish the context of the terminal device. Impact is similar to that described above. Additional signaling overheads are added. The additional signaling overheads have great impact on some IoT devices, and service continuity is affected during the primary authentication. Details are described above.

If the USIM or the non-volatile memory of the ME stores GUTIs allocated by a plurality of equivalent PLMNs, an existing standard does not define how the terminal device selects a GUTI.

When the terminal device selects the GUTI allocated by the another PLMN, if the USIM or the non-volatile memory of the ME has a plurality of GUTIs allocated by the PLMN, the existing standard does not define how the terminal device selects a GUTI.

For the foregoing problems, this application provides a method for processing a non-access stratum context. The method may be applied to a process in which a terminal device registers to a PLMN and a process in which the terminal device deregisters from the PLMN. According to the method, a problem that a context (including a GUTI and a NAS security context) of the terminal device stored by the terminal device is inconsistent with a context of the terminal device stored on a network side can be resolved, and additional primary authentication is avoided between the network side and the terminal device side to avoid additional signaling overheads. The method also resolves a problem of selecting a GUTI by the terminal device.

As shown in FIG. 2, a network architecture in this application may include a terminal device 21, an access network 22, and a core network 23. The access network 22 may include, for example, the 3GPP access network and the non-3GPP access network. The core network 23 may include a PLMN, and the PLMN may include an AMF.

The terminal device 21 in this embodiment of this application may be a user-side entity, such as UE, configured to receive or transmit a signal. The terminal device may also be referred to as a terminal (Terminal), UE, a mobile station (mobile station, MS), a mobile terminal (mobile terminal, MT), or the like. The terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in a remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in embodiments of this application.

Based on the foregoing network architecture, for the foregoing technical problem 1, a solution provided in this application may be as follows: When the terminal device deregisters from the PLMN, a PLMN identifier and a NAS security context established by the terminal device with the PLMN are stored in a storage medium of the terminal device. In this way, when the terminal device registers to the PLMN next time, the terminal device may determine the NAS security context of the PLMN and the terminal device based on the PLMN identifier, and protect, by using the NAS security context of the PLMN and the terminal device, a registration request message sent to the PLMN. In this way, the terminal device may obtain, based on the stored PLMN identifier, the NAS security context established by the PLMN and the terminal device, so that the NAS security context used when the terminal device sends the registration request message is consistent with a NAS security context stored in the PLMN. This avoids additional signaling overheads caused by primary authentication performed by the PLMN when the NAS security context stored in the PLMN is inconsistent with the NAS security context stored in the terminal device and reduces impact on an IoT device. This also avoids that after the primary authentication performed by the PLMN, a new key needs to be generated and a new key needs to be activated for protecting user data, and therefore, impact on service continuity is reduced.

Based on the foregoing network architecture, for the foregoing technical problem 2, a solution provided in this application may be as follows: When the terminal device deregisters from the PLMN, a storage medium stores a GUTI allocated by the PLMN to the terminal device. In this case, if the storage medium already stores a GUTI allocated by the PLMN, the terminal device may delete or update the previously stored GUTI and store the GUTI allocated this time. In this way, the terminal device side may store only the GUTI newly allocated by the PLMN this time. Because the PLMN side also stores only the latest GUTI allocated to the terminal device, when the terminal device registers to the PLMN again, a GUTI in a registration request message sent by the terminal device can be identified by the PLMN. This avoids additional signaling overheads caused by inconsistency between the GUTI in the registration request message sent by the terminal device and the GUTI stored in the PLMN, and reduces impact on an IoT device. This also avoids that after primary authentication performed by the PLMN, a new key needs to be generated and a new key needs to be activated for protecting user data, and therefore, impact on service continuity is reduced.

Based on the foregoing network architecture, for the foregoing technical problem 3, a solution provided in this application may be as follows: When registering to the PLMN, the terminal device receives an identifier that is of an equivalent PLMN and that is allocated by the PLMN. When the terminal device deregisters from the PLMN, the terminal device may store the equivalent PLMN identifier of the equivalent PLMN of the PLMN in a storage medium. In this way, when the terminal device determines that a GUTI stored in the storage medium is not allocated by the PLMN, if the terminal device can determine, based on the equivalent PLMN identifier, that the GUTI is allocated by the equivalent PLMN of the PLMN, the terminal device may include the GUTI in a registration request message if the terminal device registers to the PLMN again. The GUTI includes the equivalent PLMN identifier. In this way, when receiving the registration request message, the PLMN may obtain a context of the terminal device from the equivalent PLMN based on the GUTI. This can avoid that in a conventional technology, the terminal device cannot select the GUTI allocated by the equivalent PLMN because the terminal device does not store the equivalent PLMN identifier of the equivalent PLMN, and therefore, a problem that a network side cannot obtain the context of the terminal device from the equivalent network is avoided. For the technical problem 3, this solution of this application further provides a GUTI selection method. When the terminal device stores a plurality of GUTIs allocated by the PLMN or an equivalent PLMN or another PLMN, the terminal device selects a recently allocated GUTI, or the terminal device selects a GUTI based on an access network used for registration.

The following first describes the solution of the foregoing technical problem 1.

### Embodiment 1

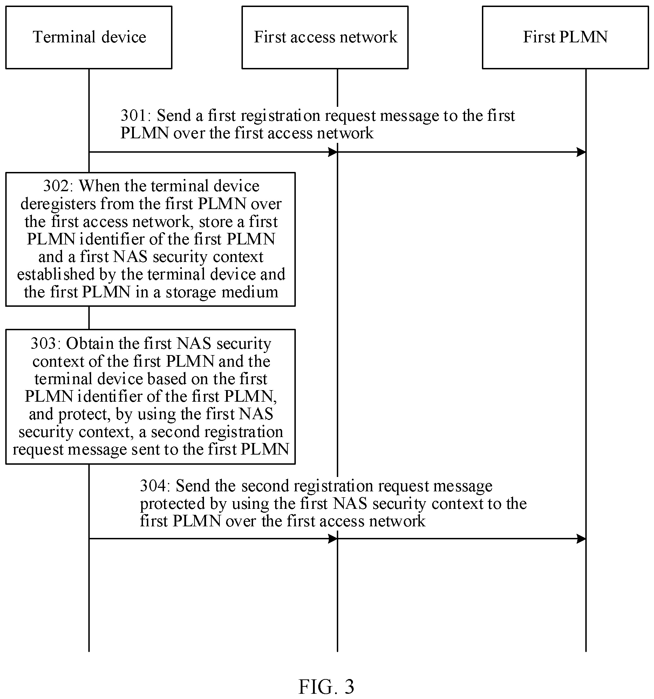

This application provides a method for processing a non-access stratum context. As shown in FIG. 3, the method may include the following steps.

301: A terminal device sends a first registration request message to a first PLMN over a first access network. The first PLMN sends a registration accept message to the terminal device.

The first access network may be a 3GPP access network or a non-3GPP access network.

302: When the terminal device deregisters from the first PLMN over the first access network, the terminal device stores, in a storage medium of the terminal device, a first PLMN identifier of the first PLMN and a first NAS security context established by the terminal device with the first PLMN.

In this application document, a NAS security context includes a key Kamf, a key identifier ngKSI of the key Kamf, selected NAS cipher and integrity algorithms (or algorithm identifiers), and a security parameter related to a 3GPP NAS connection. Alternatively, the first NAS security context includes a key Kamf, a key identifier ngKSI of the key Kamf, selected NAS cipher and integrity algorithms (or algorithm identifiers), and a security parameter related to a 3GPP NAS connection. Alternatively, the first NAS security context includes a key Kamf, a key identifier ngKSI of the key Kamf, selected NAS cipher and integrity algorithms (or algorithm identifiers), a security parameter related to a 3GPP NAS connection, and a security parameter related to a non-3GPP NAS connection. The key Kamf is used to generate a NAS cipher key and a NAS integrity key. The NAS cipher key is used to encrypt a NAS message, and the NAS integrity key is used to protect integrity of the NAS message. The security parameter related to the 3GPP NAS connection includes an identifier of the 3GPP NAS connection and a NAS count of the 3GPP NAS connection. The security parameter related to the non-3GPP NAS connection includes an identifier of the non-3GPP NAS connection and a NAS count of the non-3GPP NAS connection. A NAS count includes an uplink NAS count and a downlink NAS count. A NAS security context that corresponds to the 3GPP access network includes a key Kamf, a key identifier ngKSI of the key Kamf, selected NAS cipher and integrity algorithms (or algorithm identifiers), and a security parameter related to a 3GPP NAS connection. A NAS security context that corresponds to the non-3GPP access network includes a key Kamf, a key identifier ngKSI of the key Kamf, selected NAS cipher and integrity algorithms (or algorithm identifiers), and a security parameter related to a non-3 GPP NAS connection. The first NAS security context is a NAS security context established by the terminal device with the first PLMN or a NAS security context that is established by the terminal device with the first PLMN and that corresponds to the first access network.

In this application document, a connection identifier is the identifier of the 3GPP NAS connection or the identifier of the non-3GPP NAS connection.

In this application document, the 3GPP NAS security context includes the key Kamf, the key identifier ngKSI of the key Kamf, the selected NAS cipher and integrity algorithms (or algorithm identifiers), and the security parameter related to the 3GPP NAS connection.

In this application document, the non-3GPP NAS security context includes the key Kamf, the key identifier ngKSI of the key Kamf, the selected NAS cipher and integrity algorithms (or algorithm identifiers), and the security parameter related to the non-3GPP NAS connection.

In this application document, the storage medium of the terminal device is a USIM of the terminal device, a non-volatile memory of a mobile equipment, or a non-volatile memory of the terminal device.

In this application document, when the terminal device deregisters from the first PLMN over the first access network may be considered as "when a registration state of the terminal device on the first access network changes from a registered state to a deregistered state", "after a registration state of the terminal device on the first access network changes from a registered state to a deregistered state", "when the terminal device receives a deregistration accept message", "after the terminal device receives a deregistration accept message", "when the terminal device sends a deregistration accept message", or "after the terminal device sends a deregistration accept message".

In some embodiments, if the USIM of the terminal device supports storage of a registration management parameter, the terminal device stores the first NAS security context and the first PLMN identifier on the USIM, where the first PLMN identifier corresponds to the first NAS security context.

If the USIM does not support storage of a registration management parameter, the terminal device stores the first NAS security context and the first PLMN identifier in a non-volatile storage medium of the terminal device, where the first PLMN identifier corresponds to the first NAS security context.

In some embodiments, the terminal device stores the first NAS security context and the first PLMN identifier in the storage medium of the terminal device, and sets the first NAS security context to valid.

In some embodiments, the terminal device may store the first NAS security context and the first PLMN identifier in the following manners.

### Manner 1

In some embodiments, the terminal device may store the first NAS security context and the first PLMN identifier based on a PLMN. Therefore, the terminal device may store the first NAS security context and the first PLMN identifier in a file used to store a NAS security context of the first PLMN. Optionally, the terminal device further stores an identifier of the first access network in the file used to store the NAS security context of the first PLMN.

That the terminal device stores the first NAS security context and the first PLMN identifier in the file used to store the NAS security context of the first PLMN includes:
If the storage medium of the terminal device does not store a NAS security context established by the terminal device with the first PLMN, or does not store a NAS security context that is established by the terminal device with the first PLMN and that corresponds to the first access network, the terminal device stores a first NAS security file and the first PLMN identifier in the storage medium of the terminal device.

If the storage medium of the terminal device already stores a NAS security context of the terminal device with the first PLMN, or already stores a NAS security context that is established by the terminal device with the first PLMN and that corresponds to the first access network, the terminal device replaces the stored NAS security context of the terminal device with the first PLMN or the stored NAS security context that is established by the terminal device with the first PLMN and that corresponds to the first access network with the first NAS security context, and stores the first PLMN identifier. In other words, if the storage medium of the terminal device already stores the NAS security context that corresponds to the first access network of the first PLMN, the terminal device replaces the stored NAS security context with the first NAS security context, and optionally stores the first PLMN identifier.

In this manner, in the storage medium of the terminal device, each PLMN corresponds to one NAS security context used to store the PLMN, and the NAS security context includes a 3GPP NAS security context and a non-3GPP NAS security context.

For example, before the first NAS security context and the first PLMN identifier are stored, if the file used to store the NAS security context of the first PLMN does not store a NAS security context or a NAS security context that corresponds to the first access network, the terminal device stores the first NAS security file and the first PLMN identifier in the file.

Before the first NAS security context and the first PLMN identifier are stored, if the file used to store the NAS security context of the first PLMN already stores a NAS security context or a NAS security context that corresponds to the first access network, or a NAS security context stored in the file or a NAS security context that corresponds to the first access network that has been stored in the file is set to invalid, the terminal device replaces the NAS security context stored in the file with the first NAS security context, or replaces the stored NAS security context that corresponds to the first access network with the first NAS security context. Optionally, the terminal device stores the first PLMN identifier.

In this way, when the first access network is a 3GPP access network, the storage medium of the terminal device includes a file used to store the NAS security context of the first PLMN, and the file used to store the NAS security context of the first PLMN includes a first NAS security context that is established by the terminal device with the first PLMN and that corresponds to the 3GPP access network, and the first PLMN identifier of the first PLMN. When the first access network is a non-3GPP access network, a file used to store the NAS security context of the first PLMN includes a first NAS security context that is established by the terminal device with the first PLMN and that corresponds to the non-3GPP access network, and the first PLMN identifier of the first PLMN.

In some embodiments, the terminal device further stores a connection identifier of the first access network in the file used to store the NAS security context of the first PLMN. For example, a connection identifier of the 3GPP access network or the non-3GPP access network is stored.

### Manner 2

In some embodiments, the terminal device may store the first NAS security context and the first PLMN identifier based on a type of an access network. Therefore, the terminal device may store the first NAS security context and the first PLMN identifier in a file that is in the storage medium of the terminal device and that is used to store a NAS security context of the first access network.

If the storage medium of the terminal device does not store a NAS security context that corresponds to the first access network, the terminal device stores the first NAS security context and the first PLMN identifier in the storage medium of the terminal device.

If the storage medium of the terminal device already stores a NAS security context that corresponds to the first access network, the terminal device replaces the stored NAS security context that corresponds to the first access network with the first NAS security context, and stores the first PLMN identifier.

In other words, after the file used to store the NAS security context of the first access network stores the first NAS security context, there is only the first NAS security context, and then the first PLMN identifier is stored.

In addition, in this manner, if the type of the access network includes a 3GPP access network and a non-3GPP access network, in the storage medium of the terminal device, there may be two files used to store NAS security contexts. One file is used to store a NAS security context that corresponds to the 3GPP access network, and the other file is used to store a NAS security context that corresponds to the non-3GPP access network.

For example, before the first NAS security context and the first PLMN identifier are stored, if the file used to store the NAS security context of the first access network does not store a NAS security context of the first PLMN and the terminal device, the terminal device stores a first NAS security file and the first PLMN identifier in the file.

For example, when the first access network is the 3GPP access network, if the file used to store the NAS security context that corresponds to the 3GPP access network does not store the NAS security context of the first PLMN and the terminal device, the terminal device stores the first NAS security context and the first PLMN identifier in the file used to store the NAS security context of the 3GPP access network. For another example, when the first access network is the non-3GPP access network, if the file used to store the security context that corresponds to the non-3GPP access network does not store the NAS security context of the first PLMN and the terminal device, the terminal device stores the first NAS security context and the first PLMN identifier in the file used to store the NAS security context of the non-3GPP access network.

Before the first NAS security context and the first PLMN identifier are stored, if the file used to store the NAS security context of the first access network already stores a NAS security context of the first PLMN and the terminal device and the first PLMN identifier, or if the file used to store the NAS security context of the first access network already stores a NAS security context of the first PLMN and the terminal device and the first PLMN identifier but the NAS security context and the first PLMN identifier are set to invalid, the terminal device replaces the stored NAS security context of the first PLMN and the terminal device with the first NAS security context, and optionally stores the first PLMN identifier.

In this manner, the file used to store the NAS security context that corresponds to the first access network may store a plurality of PLMN identifiers and NAS security contexts of the terminal device and a plurality of PLMNs. For example, the file used to store the NAS security context of the 3GPP access network may store a plurality of 3GPP NAS security contexts of a plurality of PLMNs and the terminal device at the same time, or the file used to store the NAS security context of the non-3GPP access network may store a plurality of non-3GPP NAS security contexts of a plurality of PLMNs and the terminal device at the same time. For another example, before the first NAS security context and the first PLMN identifier are stored, if the file used to store the NAS security context that corresponds to the first access network does not include a NAS security context and a PLMN identifier, the terminal device stores the first NAS security file and the first PLMN identifier in the file.

Before the first NAS security context and the first PLMN identifier are stored, if the file used to store the NAS security context that corresponds to the first access network already stores a NAS security context and a PLMN identifier, or if the file used to store the NAS security context that corresponds to the first access network already stores a NAS security context and a PLMN identifier but the NAS security context and the PLMN identifier are set to invalid, the terminal device replaces the stored NAS security context with the first NAS security context, and replaces the stored PLMN identifier with the first PLMN identifier.

The stored NAS security context herein may be understood as a NAS security context established by the terminal device with the first PLMN or another PLMN over the first access network.

For example, when the first access network is the 3GPP access network, if the file used to store the NAS security context of the 3GPP access network already stores a NAS security context and a PLMN identifier, the terminal device replaces the stored NAS security context in the file used to store the NAS security context of the 3GPP access network with the first NAS security context, and replaces the stored PLMN identifier with the first PLMN identifier.

For example, when the first access network is the non-3GPP access network, if the file used to store the NAS security context of the non-3GPP access network already stores a NAS security context and a PLMN identifier, the terminal device replaces the stored NAS security context in the file used to store the NAS security context of the non-3GPP access network with the first NAS security context, and replaces the stored PLMN identifier with the first PLMN identifier.

In this case, only one NAS security context and one PLMN identifier are stored in a file that corresponds to one access network, that is used to store a NAS security context that corresponds to the access network, and that is in the storage medium of the terminal device. For example, it may be understood that the file used to store the NAS security context of the first access network stores only one PLMN identifier and a corresponding NAS security context. For example, the file used to store the NAS security context of the 3GPP access network stores only one 3GPP NAS security context of one PLMN, or the file used to store the NAS security context of the non-3GPP access network stores only one non-3GPP NAS security context of one PLMN.

### Manner 3

In some embodiments, the terminal device may store the first NAS security context and the first PLMN identifier based on a PLMN and a type of an access network. Therefore, the terminal device may store the first NAS security context and the first PLMN identifier in a file used to store a NAS security context that is of the first PLMN and the terminal device and that corresponds to the first access network.

In this manner, if the type of the access network accessed by the terminal device includes a 3GPP access network and a non-3GPP access network, in the storage medium of the terminal device, each PLMN may correspond to two files used to store NAS security contexts of the PLMN and the terminal device. One file is used to store a NAS security context that is of the PLMN and the terminal device and that corresponds to the 3GPP access network and an identifier of the PLMN, and the other file is used to store a NAS security context that is of the PLMN and the terminal device and that corresponds to the non-3GPP access network and an identifier of the PLMN.

In the foregoing plurality of manners, before the first NAS security context and the first PLMN identifier are stored in the storage medium of the terminal device, the method further includes: The terminal device deregisters from the first PLMN over all access networks. For example, after the terminal device deregisters from the first PLMN over the first access network, if the terminal device further registers to the first PLMN over a second access network, the terminal device stores, in the storage medium of the terminal device, the first PLMN identifier of the first PLMN and the first NAS security context established by the terminal device with the first PLMN only after the terminal device also deregisters from the first PLMN over the second access network. In this way, a process in which a terminal device stores a NAS security context and a PLMN identifier to a storage medium can be simplified.

Specifically, it may be understood that, the terminal device stores the first NAS security context and the first PLMN identifier after the terminal device deregisters over all access networks (for example, a 3GPP access network and a non-3GPP access network) (that is, all NAS connections of the terminal device in the first PLMN are in a deregistered state). For example, after the terminal device deregisters from the first PLMN over the 3GPP access network, if the terminal device is still registered with the first PLMN over another access network (for example, the non-3GPP access network) (that is, the terminal device is still in a registered state in the first PLMN on the non-3GPP access network), the terminal device stores the current first NAS security context and the first PLMN identifier only after the terminal device deregisters from the another access network (for example, the non-3GPP access network).

In some embodiments, the method may further include the following step.

The terminal device may further store first time information. The first time information is a moment at which the terminal device last uses the first NAS security context, a moment at which the terminal device deregisters from the first PLMN over the first access network, a moment at which the terminal device stores the first NAS security context, or a validity period of the first NAS security context.

In this way, the terminal device may determine, based on the first time information, that the first NAS security context is invalid, and delete the first NAS security context stored in the storage medium of the terminal device or set the first NAS security context to invalid. The invalid first NAS security context may be replaced with a NAS security context to be stored subsequently. In this way, storage space of the storage medium of the terminal device can be saved.

In addition, when the terminal device deletes the first NAS security context stored in the storage medium of the terminal device or sets the first NAS security context to invalid based on the first time information, the terminal device deletes the first PLMN identifier in the storage medium of the terminal device or sets the first PLMN identifier to invalid.

If the terminal device needs to register to the first PLMN over the first access network again, the method further includes the following steps.

303: Before the terminal device sends a second registration request message to the first PLMN, the terminal device obtains the first NAS security context of the first PLMN and the terminal device based on the first PLMN identifier of the first PLMN, and protects, by using the first NAS security context, the second registration request message sent to the first PLMN.

The terminal device obtains the NAS security context of the first PLMN and the terminal device from the storage medium of the terminal device based on the first PLMN identifier. In some embodiments, if the USIM of the terminal device supports the storage of the registration management parameter, the terminal device reads the first NAS security context from the UISM based on the first PLMN identifier. If the USIM does not support the storage of the registration management parameter, the terminal device reads the first NAS security context from the non-volatile storage medium of the terminal device based on the identifier of the first PLMN.

That the terminal device obtains the first NAS security context of the first PLMN and the terminal device based on the first PLMN identifier includes the following embodiments.

In some embodiments, the terminal device reads a NAS security context and a PLMN identifier that corresponds to the first access network and that are stored in the storage medium of the terminal device. If the read NAS security context that corresponds to the first access network is the NAS security context established by the terminal device with the first PLMN (that is, the read PLMN identifier is the first PLMN identifier), the terminal device obtains the NAS security context that corresponds to the first access network to protect the second registration request message.

In other words, the terminal device may obtain the first NAS security context by comparing the first PLMN identifier with a storage identifier in the file used to store the NAS security context of the first access network.

For example, when the first access network is the 3GPP access network, the terminal device reads a NAS security context and a PLMN identifier that are in the file used to store the NAS security context of the 3 GPP access network. If the PLMN identifier is the same as the first PLMN, the terminal device obtains the NAS security context, and protects the registration request message by using the NAS security context. When the first access network is the non-3GPP access network, the terminal device reads a NAS security context and a PLMN identifier that are in the file used to store the NAS security context of the non-3GPP access network. If the PLMN identifier is the same as the first PLMN, the terminal device obtains the NAS security context, and protects the registration request message by using the NAS security context.

In some other embodiments, the terminal device reads a PLMN identifier and a NAS security context of the terminal device and the PLMN that are stored in the storage medium of the terminal device. If the PLMN identifier is the same as the first PLMN identifier, the terminal device obtains the stored NAS security context to protect the second registration request message.

For example, the terminal device reads a file that is in the storage medium and that is used to store a NAS security context of a PLMN and the terminal device. If a PLMN identifier in the file is the same as the first PLMN identifier, the terminal device obtains the stored NAS security context, and protects the second registration request message by using the stored NAS security context.

In some other embodiments, the terminal device reads a PLMN identifier, a connection identifier, and a NAS security context that are stored in the storage medium. If the stored PLMN identifier is the same as the first PLMN identifier, and the stored connection identifier is the same as the connection identifier that corresponds to the first access network, the terminal device obtains the stored NAS security context, and protects the second registration request message by using the stored NAS security context.

For example, the terminal device reads a file that is in the storage medium and that is used to store a NAS security context of a PLMN and the terminal device. If a PLMN identifier in the file is the same as the first PLMN identifier, and a connection identifier in the file is the same as the connection identifier that corresponds to the first access network, the terminal device obtains the stored NAS security context, and protects the second registration request message by using the NAS security context.

In some other embodiments, if the storage medium of the terminal device does not include a NAS security context of the terminal device with the first PLMN, the terminal device obtains a recently stored NAS security context based on a stored NAS security context and stored time information, and protects the second registration request message by using the NAS security context. The time information is a moment at which the terminal device last uses the stored NAS security context, a moment at which the terminal device stores the stored NAS security context, or a validity period of the stored NAS security context.

In some embodiments, the method may further include: The terminal device obtains a first GUTI on the storage medium of the terminal device, and includes the first GUTI in the second registration request message. The first GUTI includes the first PLMN identifier.

304: The terminal device sends, to the first PLMN over the first access network, the second registration request message protected by using the first NAS security context.

The following uses a process in which the terminal device registers to the first PLMN again after deregistering from the first PLMN as an example for description.

For example, in the following scenarios:
An example in which an access network 1 is a 3GPP access network is used for description. An access network 2 is a non-3GPP access network.

Step 51: A terminal device registers to a PLMN-A over the access network 1 (the 3GPP access network) and the access network 2 (the non-3GPP access network), and then the terminal device deregisters from the PLMN-A over the access network 2.

After the terminal device registers to the PLMN-A over both the access network 1 and the access network 2, the PLMN-A (or an access and mobility management node of the PLMN-A) and the terminal device establish a NAS security context.

When the terminal device deregisters from the PLMN-A over the non-3GPP access network:
When a NAS security context and a PLMN identifier are stored based on an access type, the terminal device may store a PLMN-A identifier and a NAS security context established by the terminal device with the PLMN-A in a file used to store a NAS security context that corresponds to the non-3GPP access network, or the terminal device may store a PLMN-A identifier and a NAS security context that is established by the terminal device with the PLMN-A and that corresponds to the non-3GPP access network in a file used to store a NAS security context that corresponds to the non-3GPP access network.

Alternatively, when a storage medium of the terminal device stores a NAS security context and a PLMN identifier based on a PLMN type, the terminal device may store a NAS security context that is established by the terminal device with the PLMN-A over the non-3GPP access network and a PLMN-A identifier, or store a PLMN-A identifier and a NAS security context that is established by the terminal device with the PLMN-A over the non-3GPP access network and that corresponds to the non-3GPP, in a file used to store a NAS security context of the PLMN-A and the terminal. The terminal device may further store a connection identifier that corresponds to the non-3GPP access network in the file used to store the NAS security context of the PLMN-A and the terminal.

Alternatively, when a NAS security context and a PLMN identifier are stored based on a PLMN type and an access type, in a storage medium of the terminal device, a file that is used to store a NAS security context that is of the terminal device and the PLMN-A and that corresponds to the non-3GPP access network stores a PLMN-A identifier and a NAS security context established by the terminal device with the PLMN-A.

In some embodiments, when the terminal device deregisters from the PLMN-A over the non-3GPP access network:
If a USIM of the terminal device supports storage of a registration management parameter, the terminal device stores the NAS security context that corresponds to the non-3GPP access network and the PLMN-A identifier in the USIM. If a USIM does not support storage of a registration management parameter, the terminal device stores the NAS security context that corresponds to the non-3GPP access network and the PLMN-A identifier in a non-volatile storage medium of an ME. The storage manner may be based on the PLMN type, the access type, or the PLMN type and the access type.

For the PLMN-A, the PLMN-A (namely, the access and mobility management node of the PLMN-A) stores a 3GPP NAS security context established by the terminal device with the PLMN-A over the 3GPP access network and a non-3GPP NAS security context established by the terminal device with the PLMN-A over the non-3GPP access network.

Step 52: The terminal device registers to a PLMN-B over the non-3GPP access network, and then the terminal device deregisters from the PLMN-B over the non-3GPP access network.

After the terminal device registers to the PLMN-B over the non-3GPP access network, the terminal device and the PLMN-B establish a non-3GPP NAS security context.

Then, when the terminal device deregisters from the PLMN-B over the non-3GPP access network:
If the USIM of the terminal device supports the storage of the registration management parameter, the terminal device stores, in the USIM, the NAS security context that is established by the terminal device with the PLMN-B and that corresponds to the non-3GPP access network and a PLMN-B identifier. If the USIM of the terminal device does not support the storage of the registration management parameter, the terminal device stores, in a non-volatile memory of the ME, the NAS security context that is established by the terminal device with the PLMN-B and that corresponds to the non-3GPP access network and a PLMN-B identifier.

Step 53: The terminal device registers to the PLMN-A over the non-3GPP access network.
When the terminal device registers to the PLMN-A again over the non-3GPP access network, the terminal device may perform one of the following operations.

Operation 1: If the USIM or the non-volatile storage medium of the terminal device stores the NAS security context that corresponds to the non-3GPP access network and the PLMN-A identifier, the terminal device obtains, based on the PLMN-A identifier, a security context that is established by the terminal device with the PLMN-A and that corresponds to the non-3GPP access network. The terminal device protects a second registration request message by using the NAS security context that corresponds to the non-3GPP access network.

Operation 2: If a volatile storage medium of the terminal device includes a common NAS security context established by the terminal device with the PLMN-A, and the non-volatile storage medium of the terminal device or the USIM includes a NAS security context that is established by the terminal device with the PLMN-A and that corresponds to the non-3GPP access network, the terminal device obtains, based on the PLMN-A identifier, the NAS security context that is established by the terminal device with the PLMN-A and that corresponds to the non-3GPP access network in the non-volatile storage medium of the terminal device or the USIM, and protects a second registration request message by using the NAS security context that corresponds to the non-3GPP access network.

Operation 3: If a volatile storage medium of the terminal device includes a common NAS security context established by the terminal device with the PLMN-A, and the non-volatile storage medium of the terminal device or the USIM includes a NAS security context that is established by the terminal device with the PLMN-A and that corresponds to the non-3GPP access network, and the NAS security context that corresponds to the non-3GPP access network is valid, the terminal device obtains, based on the PLMN-A identifier, the NAS security context that is established by the terminal device with the PLMN-A and that corresponds to the non-3GPP access network in the non-volatile storage medium of the terminal device or the USIM, and protects a second registration request message by using the NAS security context that corresponds to the non-3GPP access network.

Operation 4: If a volatile storage medium of the terminal device includes a common NAS security context established by the terminal device with the PLMN-A, and the non-volatile storage medium of the terminal device or the USIM includes a NAS security context that is established by the terminal device with the PLMN-A and that corresponds to the non-3GPP access network, but the NAS security context that corresponds to the non-3GPP access network is invalid, the terminal device obtains the common NAS security context in the volatile storage medium of the terminal device based on the PLMN-A identifier, and protects a second registration request message by using the common NAS security context, and an uplink NAS count and a downlink NAS count whose values are 0.

Operation 5: If a volatile storage medium of the terminal device includes a common NAS security context established by the terminal device with the PLMN-A, but the non-volatile storage medium of the terminal device or the USIM does not include a NAS security context that is established by the terminal device with the PLMN-A and that corresponds to the non-3 GPP access network, the terminal device obtains the common NAS security context in the volatile storage medium of the terminal device based on the PLMN-A identifier, and protects a second registration request message by using the common NAS security context, and an uplink NAS count and a downlink NAS count whose values are 0.

Operation 6: If a volatile storage medium of the terminal device does not have a NAS security context established by the terminal device with the PLMN-A, but the non-volatile storage medium of the terminal device or the USIM includes a NAS security context that is established by the terminal device with the PLMN-A and that corresponds to the non-3GPP access network, and the NAS security context that corresponds to the non-3GPP access network is valid, the terminal device obtains, based on the PLMN-A identifier, the NAS security context that corresponds to the non-3GPP access network, and protects a second registration request message by using the NAS security context that corresponds to the non-3GPP access network.

In this application, a common NAS security context established by the terminal device with a PLMN includes one or more of the following: a key Kamf, a key identifier ngKSI, selected NAS cipher and integrity algorithms (or algorithm identifiers), a NAS cipher key, and a NAS integrity key. For example, the common NAS security context established by the terminal device with the PLMN includes the key identifier ngKSI, the selected NAS cipher and integrity algorithms (or algorithm identifiers), the NAS cipher key, and the NAS integrity key. For another example, the common NAS security context established by the terminal device with the PLMN includes the key Kamf, the key identifier ngKSI, and the selected NAS cipher and integrity algorithms (or algorithm identifiers).

Because the PLMN-A stores the NAS security context that is established by the terminal device with the PLMN-A and that corresponds to the non-3GPP access network, after the terminal device protects the registration request message by using the non-3GPPNAS security context that corresponds to the PLMN-A identifier, the PLMN-A may process the registration request message based on a non-3GPP NAS security context stored in the PLMN-A. This avoids that the PLMN-A performs primary authentication due to inconsistency between the NAS security context stored in the PLMN-A and the NAS security context stored in the terminal device, and therefore, additional signaling overheads are avoided.

For another example, in a non-multi-registration scenario, the terminal device first registers to the PLMN-A over the access network 1, and then deregisters from the PLMN-A. In this case, the terminal device may store a NAS security context that is established when the terminal device registers to the PLMN-A and a PLMN-A identifier. The PLMN-A stores the NAS security context established when the terminal device registers to the PLMN-A over the access network 1.

Then, the terminal device registers to the PLMN-B over the access network 1, and then deregisters from the PLMN-B. In this case, a storage medium of the terminal device may store a NAS security context established when the terminal device registers to the PLMN-B over the access network 1 and a PLMN-B identifier. The PLMN-B stores the NAS security context established when the terminal device registers to the PLMN-B over the access network 1.

If the terminal device re-registers to the PLMN-A over the access network 1, the terminal device may obtain, based on the PLMN-A identifier, the NAS security context that is stored in the terminal device and that is established by the terminal device with the PLMN-A, and the PLMN-A still stores the NAS security context that is established when the terminal device registers to the PLMN-A over the access network 1. In this way, after the terminal device protects a registration request message by using the NAS security context that corresponds to the PLMN-A identifier, the PLMN-A may process the registration request message based on the NAS security context stored in the PLMN-A. This avoids that the PLMN-A performs primary authentication due to inconsistency between the NAS security context stored in the PLMN-A and the NAS security context stored in the terminal device, and therefore, additional signaling overheads are avoided.

The following further describes the solution of the foregoing technical problem 2.

### Embodiment 2

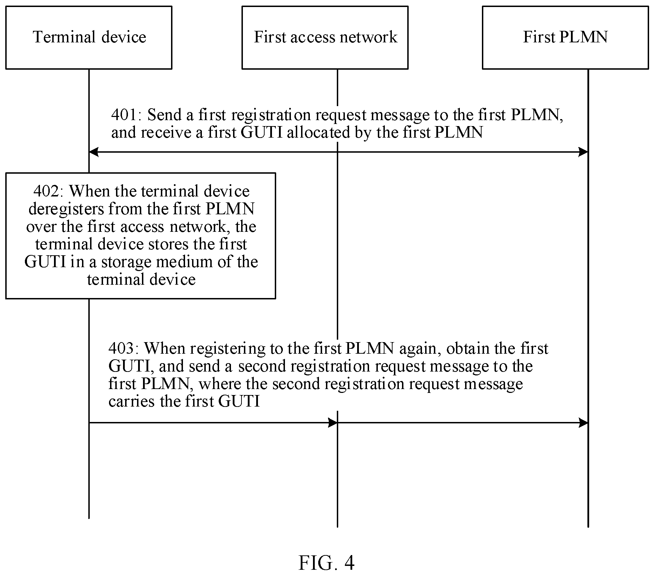

This application provides a method for processing a non-access stratum context. As shown in FIG. 4, the method may include the following steps.

401: A terminal device sends a first registration request message to a first PLMN over a first access network, and the terminal device receives a first GUTI allocated by the first PLMN, where the first GUTI is used to identify the terminal device, and the first GUTI includes a first PLMN identifier.

402: When the terminal device deregisters from the first PLMN over the first access network, the terminal device stores the first GUTI in a storage medium of the terminal device.

In this case, if a USIM of the terminal device supports storage of a registration management parameter, the terminal device stores the first GUTI in the USIM, or if a USIM does not support storage of a registration management parameter, the terminal device stores the first GUTI in a non-volatile memory.

In some embodiments, when the terminal device stores the first GUTI in the storage medium of the terminal device, if the storage medium of the terminal device already stores a second GUTI, the terminal device deletes the second GUTI and stores the first GUTI, or replaces the second GUTI with the first GUTI.

It may be understood that the second GUTI is sent by the first PLMN to the terminal device before the first PLMN allocates the first GUTI. In other words, when the terminal device already stores, in the storage medium, the second GUTI allocated by the first PLMN, the terminal device deletes the second GUTI, or the terminal device replaces the second GUTI with the first GUTI.

For example, when the first access network is a 3GPP access network, the first GUTI is stored in a file used to store location information or a GUTI of the 3GPP access network. In addition, if the second GUTI already exists in a file used to store location information or a GUTI of a non-3GPP access network access, and the second GUTI is also allocated by the first PLMN, the terminal device deletes the second GUTI, and/or replaces the second GUTI with the first GUTI.

For example, when the first access network is a non-3GPP access network, the first GUTI is stored in a file used to store location information or a GUTI of the non-3GPP access network. In addition, if the second GUTI already exists in a file used to store location information or a GUTI of a 3GPP access network access, and the second GUTI is also allocated by the first PLMN, the terminal device deletes the second GUTI, and/or replaces the second GUTI with the first GUTI.

In some embodiments, when the terminal device stores the first GUTI in the storage medium of the terminal device, if the storage medium of the terminal device does not store a second GUTI (that is, the storage medium of the terminal device does not store a GUTI allocated by the first PLMN), the terminal device stores the first GUTI. The second GUTI is sent by the first PLMN to the terminal device before the first GUTI.

For example, when the first access network is a 3GPP access network, if the storage medium of the terminal device does not store the second GUTI allocated by the first PLMN to the terminal device, and the second GUTI is allocated when the terminal device registers to the first PLMN over a non-3GPP access network, the terminal device stores the first GUTI in the storage medium.

In some embodiments, the terminal device may store the first GUTI in the storage medium of the terminal device in the following manner.

The terminal device determines an earliest GUTI stored in the storage medium of the terminal device, and the terminal device deletes the stored earliest GUTI, and/or stores the first GUTI in a file used to store the earliest GUTI. The stored earliest GUTI may be an invalid GUTI. Therefore, the terminal device may replace the stored earliest GUTI with the newly allocated first GUTI.

In some embodiments, the terminal device may store the first GUTI after the terminal device receives the first GUTI sent by the first PLMN, or after the terminal device deregisters from the first PLMN over the first access network (that is, after the terminal device is in a deregistered state on a NAS connection that is between the terminal device and the first PLMN and that is established over the first access network).

Alternatively, in some embodiments, if the terminal device deregisters from the first PLMN over all access networks, the terminal device determines to store the first GUTI in the storage medium of the terminal device.

In some embodiments, the method may further include: The terminal device further stores second time information in the storage medium of the terminal device, where the second time information is a moment at which the first PLMN allocates the first GUTI or a moment at which the terminal device stores the first GUTI.

The second time information is used by the terminal device when registering to the first PLMN. The terminal device selects, based on the second time information, a GUTI newly allocated by the first PLMN, a GUTI that is allocated by the first PLMN and that is recently used by the terminal device or the first PLMN, or a GUTI that is allocated by the first PLMN and that is recently stored by the terminal device, and includes the selected GUTI in a registration request message sent by the terminal device to the first PLMN. In this way, the GUTI selected based on the second time information may be consistent with a GUTI stored in the first PLMN when the terminal device registers to the first PLMN again.

When the terminal device re-registers to the first PLMN after deregistering from the first PLMN, the method may further include the following step.

403: Possibly, when registering to the first PLMN again, the terminal device obtains the first GUTI on the storage medium of the terminal device, and sends a second registration request message to the first PLMN, where the second registration request message carries the first GUTI.

For example, when the terminal device registers to the first PLMN over the first access network (for example, the 3GPP access network or the non-3GPP access network), the terminal device sends the second registration request message to the first PLMN. Before sending the second registration request message, the terminal device first obtains the first GUTI allocated by the first PLMN to the terminal device and a NAS security context that is stored by the terminal device and that is established with the first PLMN over the first access network, includes the first GUTI in the second registration request message, and protects the second registration request message by using the NAS security context.

In some embodiments, before the terminal device sends the second registration request message, a manner of obtaining the first GUTI may be as follows: The terminal device reads all GUTIs stored in the storage medium, selects a GUTI allocated by the first PLMN, and includes the GUTI in an authentication request message. The GUTI allocated by the first PLMN is the first GUTI.

If the storage medium of the terminal device stores multiple GUTIs allocated by the first PLMN, the terminal device may select, based on time information that corresponds to each GUTI, a GUTI recently allocated by the first PLMN. Alternatively, the terminal device may select a GUTI based on a type of an access network. The meaning of the time information herein is similar to that of the second time information.

For example, if the storage medium of the terminal device stores multiple GUTIs allocated by the first PLMN, the terminal device selects, from the multiple GUTIs, a GUTI that corresponds to the first access network, and includes the GUTI that corresponds to the first access network in the second registration request message. In this case, the determined GUTI that corresponds to the first access network may be understood as the selected first GUTI. For example, if the first access network is the 3GPP access network, the terminal device selects a GUTI stored in the file used to store the location information or the GUTI of the 3GPP access network as the first GUTI. If the first access network is the non-3GPP access network, the terminal device selects a GUTI stored in the file used to store the non-3GPP access network or the GUTI as the first GUTI.

For another example, if the storage medium of the terminal device stores multiple GUTIs allocated by the first PLMN, the terminal device determines, based on the time information that corresponds to each GUTI, the GUTI recently allocated by the first PLMN or a GUTI that is recently stored in the terminal device and that is allocated by the first PLMN. The terminal device includes the most recently stored GUTI or the recently allocated GUTI in the second registration request message, where the most recently stored GUTI or the recently allocated GUTI is the first GUTI.

In some embodiments, before the terminal device sends the second registration request message, a manner in which the terminal device selects the first GUTI may further be as follows.

The terminal device sequentially reads, from the storage medium, multiple files that store GUTIs. When a read GUTI is allocated by the first PLMN, that is, the read GUTI includes the first PLMN identifier of the first PLMN, the terminal device stops reading the file of the GUTI, and includes the GUTI in the second registration request message.

The following describes a scenario by using an example in which the first access network is the 3GPP access network. An implementation in this scenario may include the following steps.

Step 61: A terminal device registers to a PLMN-A over a 3GPP access network. The PLMN-A allocates a GUTI denoted as a GUTI-1 to the terminal device. Then, the terminal device deregisters from the PLMN-A over the 3GPP access network.

The terminal device may store the GUTI-1 in a USIM or a non-volatile memory, and store a PLMN-A identifier.

Step 62: The terminal device registers to a PLMN-B over the 3GPP access network. The PLMN-B allocates a GUTI denoted as a GUTI-2 to the terminal device. Then, the terminal device deregisters from the PLMN-B over the 3GPP access network.

The terminal device stores the GUTI-2 in the USIM or the non-volatile memory, and stores a PLMN-B identity. In this case, because the GUTI-1 and the GUTI-2 are allocated by different PLMNs, the GUTI-1 that is allocated by the PLMN-A to the terminal device and the PLMN-A identifier are still stored in the 3GPP access network, and the terminal device further stores the GUTI-2 in the 3GPP access network. In other words, when a GUTI is stored in this application, because a PLMN identifier is further stored, not only a type of an access network is considered, but also a PLMN is considered. If a GUTI that the terminal device currently intends to store and a stored GUTI are not allocated by a same PLMN, although the GUTI that the terminal device currently intends to store and the stored GUTI are allocated when the terminal device registers to PLMNs over a same access network type, the GUTI allocated by the next PLMN still needs to be stored, and the GUTI previously stored in a file of the same access network type cannot be overwritten.

Step 63: The terminal device registers to the PLMN-A over the 3GPP access network. In this case, in step 63, after the terminal device deregisters from the PLMN-A over the 3GPP access network in step 61, the terminal device re-registers to the PLMN-A over the 3GPP access network.

In this case, the terminal device obtains, from the USIM or the non-volatile memory, a GUTI allocated by the PLMN-A to the terminal device over the 3GPP access network, where the GUTI is the GUTI-1. In this way, when the terminal device sends a registration request message to the PLMN-A over the 3GPP access network, the GUTI-1 is included. After receiving the registration request message, the PLMN-A (or an access and mobility management node of the PLMN-A) obtains a context of the terminal device based on the GUTI1 carried in the registration request message. Because the GUTI-1 in the registration request message is allocated by the PLMN-1, the PLMN-A can identify the GUTI-1, and the PLMN-A obtains, based on the GUTI-1, a NAS security context when the terminal device registers to the PLMN-A over the 3GPP access network. This avoids additional signaling overheads caused when the PLMN-A initiates primary authentication because the PLMN-A cannot identify the GUTI sent by the terminal device, and therefore, a speed of using a service by the terminal device is increased. Further, impact on some IoT devices is reduced.

The following scenario is also used as an example.

Step 71: A terminal device registers to a PLMN-A over a 3GPP access network. The PLMN-A allocates a GUTI denoted as a GUTI-1 to the terminal device. The terminal device deregisters from the PLMN-A over the 3 GPP access network.

In this case, the terminal device stores the GUTI-1 in a USIM or a non-volatile memory. Specifically, the GUTI-1 allocated by the PLMN-A may be stored in a file of the 3GPP access network. In this case, it is assumed that the file of the 3GPP access network does not store another GUTI allocated by the PLMN-A before.

Step 72: The terminal device registers to the PLMN-A over a non-3GPP access network. The PLMN-A allocates a GUTI denoted as a GUTI-2 to the terminal device. The terminal device deregisters from the PLMN-A over the non-3GPP access network.

In this case, the terminal device stores the GUTI-2 in the USIM or non-volatile memory. Different from a conventional technology, the terminal device may delete the GUTI-1 stored in the file of the 3GPP access network, and store the GUTI-2 in a file of the non-3GPP access network. Alternatively, the terminal device may delete the GUTI-1 stored in the file of the 3GPP access network, and store the GUTI-2 in the file of the 3GPP access network. In this case, the terminal device stores the GUTI-2 newly allocated by the PLMN-A, and at the same time, the PLMN-A side also replaces the GUTI-1 with the GUTI-2.

Alternatively, when time information of the GUTI is stored, both the GUTI-1 and the GUTI-2 may be stored in a file. Because both the GUTI-1 and the GUTI-2 are allocated by the PLMN-A, the terminal device may alternatively select, based on the time information, the GUTI-2 recently allocated by the PLMN-A.

Step 73: The terminal device registers to the PLMN-A over the 3GPP access network.

During the registration, if the terminal device can obtain a GUTI from the USIM, the file of the non-3GPP access network or the file of the 3GPP access network stores the newly allocated GUTI-2, or the terminal device selects the newly allocated GUTI-2 based on the time information. When a registration request message sent by the terminal device to the PLMN-A carries the GUTI-2, because the PLMN-A also stores the GUTI-2, the PLMN-A may determine a context of the terminal device based on the GUTI-2. Therefore, this can avoid primary authentication caused by that the PLMN-A cannot identify the GUTI sent by the terminal device, and thus, additional signaling overheads are avoided, impact on some IoT devices is reduced, and impact on service continuity is further reduced.

The following further describes the solution of the foregoing technical problem 3.

### Embodiment 3

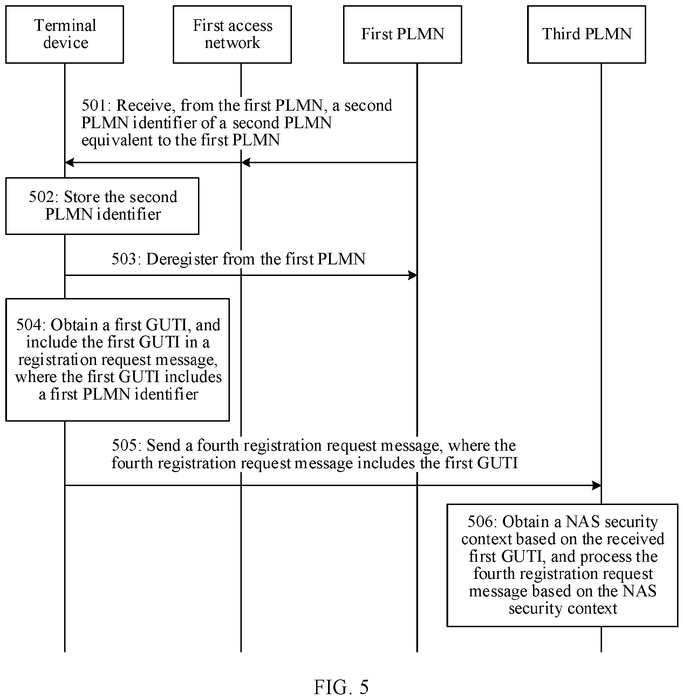

This application provides a method for processing a non-access stratum context. As shown in FIG. 5, the method may include the following steps.

501: After a terminal device sends a first registration request message to a first public land mobile network PLMN over a first access network, the terminal device receives, from the first PLMN, a second PLMN identifier of a second PLMN equivalent (equivalent) to the first PLMN.

502: The terminal device stores the second PLMN identifier in a storage medium.

When the received second PLMN identifier of the equivalent PLMN (namely, the second PLMN) is stored:
If a USIM of the terminal device supports storage of the equivalent PLMN, the terminal device may store the second PLMN identifier on the USIM. If a USIM does not support storage of the equivalent PLMN, the terminal device stores the second PLMN identifier in a non-volatile memory.

503: The terminal device deregisters from the first PLMN.

The deregistration process may be initiated by the terminal device, or may be initiated by the first PLMN.

If the terminal device needs to initiate registration with a third PLMN after step 503, the terminal device sends a registration request message to the third PLMN, where the registration request message includes a first GUTI. Before sending the registration request message, the terminal device obtains the first GUTI from the storage medium of the terminal device. The third PLMN may be the first PLMN in step 501, or may be a different PLMN.

504: The terminal device obtains the first GUTI stored in the storage medium of the terminal device.

In some embodiments, the terminal device obtains, from the storage medium, a fourth PLMN identifier of a PLMN (namely, a fourth PLMN) equivalent to the third PLMN, and obtains, from the storage medium based on the fourth PLMN identifier, a GUTI allocated by the PLMN, that is, a GUTI including the fourth PLMN identifier. The GUTI is the first GUTI. Possibly, if the storage medium of the terminal device has multiple GUTIs allocated by the PLMN equivalent to the third PLMN:
the terminal device randomly selects a GUTI allocated by the PLMN equivalent to the third PLMN, where the GUTI is the first GUTI;
the terminal device selects a GUTI recently allocated by the PLMN equivalent to the third PLMN or a GUTI that is recently stored in the terminal device and recently allocated by the PLMN equivalent to the third PLMN, where the GUTI is the first GUTI, and meaning of time information herein is similar to the meaning of the second time information in Embodiment 2; or
the terminal device selects, based on an access network accessing the third PLMN, a GUTI that is allocated by the PLMN equivalent to the third PLMN over the access network, where the GUTI is the first GUTI.

In this way, the terminal device may identify, based on an equivalent PLMN identifier, that a GUTI is allocated by an equivalent PLMN. When a GUTI includes an identifier of an equivalent PLMN of a PLMN to which the terminal device intends to be registered, the terminal device may select the GUTI, where the selected GUTI includes the identifier of the equivalent PLMN. When the PLMN to which the terminal device intends to be registered receives the GUTI, the terminal device may obtain a NAS security context of the terminal device from the equivalent PLMN based on the identifier of the equivalent PLMN in the GUTI. This can avoid additional signaling overheads caused by primary authentication performed by a PLMN because the terminal device cannot determine whether a GUTI is allocated by an equivalent PLMN and cannot select a GUTI allocated by the equivalent PLMN in a conventional technology.

In some embodiments, if the storage medium of the terminal device does not have a GUTI allocated by the third PLMN or a GUTI allocated by the equivalent network of the third PLMN, the terminal device selects a GUTI allocated by another PLMN (to be specific, a PLMN other than the third PLMN and the PLMN equivalent to the third PLMN). Possibly, if the storage medium of the terminal device includes a plurality of GUTIs allocated by another PLMN:
the terminal device selects any GUTI allocated by the another PLMN, where the GUTI is the first GUTI;
the terminal device selects, based on the access network accessing the third PLMN, a GUTI that is allocated by the another PLMN over the access network, where the GUTI is the first GUTI;
the terminal selects a GUTI recently allocated by the another PLMN; or
the terminal device generates a subscription concealed identifier (Subscription Concealed Identifier, SUCI), and the SUCI is used as the first GUTI. The SUCI is a temporary identifier used to hide a subscription permanent identifier (subscription permanent identifier, SUPI). It can encrypt the SUPI to prevent the SUPI from being transmitted over an air interface. In this way, when receiving the SUCI, the first PLMN may obtain the SUPI based on the SUCI, to identify the terminal device based on the SUPI and find the NAS security context that corresponds to the terminal device.

In the foregoing descriptions, that the terminal device selects the GUTI recently allocated by the another PLMN, or that the terminal device selects the GUTI recently allocated by the PLMN equivalent to the third PLMN may be selecting a GUTI recently allocated based on time information. The time information herein is a moment at which a PLMN allocates a GUTI or a moment at which the terminal device stores a GUTI. That the terminal device selects the GUTI recently allocated by the PLMN equivalent to the third PLMN may be that the terminal device selects a GUTI based on a tag. The tag indicates a GUTI recently allocated by a PLMN or a GUTI recently stored in the terminal device. In this manner, when the terminal device stores a GUTI, the terminal device may add a tag to the first GUTI, to indicate that the first GUTI is a GUTI recently allocated by a PLMN or a GUTI recently stored in the terminal device.

In some embodiments, the terminal device reads a GUTI that is stored in the storage medium and that is allocated by using a 3GPP access network or a non-3GPP access network. If the two GUTIs are the same, the terminal device selects a stored GUTI that is allocated by using the access network accessing the third PLMN, where the GUTI is the first GUTI.

In some embodiments, after the terminal device obtains the first GUTI according to the foregoing descriptions, if the first GUTI is allocated by using the access network accessing the third PLMN, the terminal device protects the registration request message by using a NAS security context that corresponds to the first GUTI. Otherwise, the terminal device protects the registration request message by using a NAS count whose value is 0.

505: The terminal device sends a fourth registration request message to the third PLMN, where the fourth registration request message includes the first GUTI.

506: The third PLMN obtains the NAS security context of the terminal device based on the received first GUTI, and processes, based on the NAS security context, the fourth registration request message sent by the terminal device.

In Embodiment 3, when the terminal device performs the deregistration, the terminal device may store the equivalent PLMN identifier of the equivalent PLMN, and the terminal device may determine whether a GUTI is allocated by the equivalent PLMN. Therefore, the terminal device may select the GUTI allocated by the equivalent PLMN, and the network side may also obtain the context of the terminal device from the equivalent network. In this way, a primary authentication process that is performed because the network side cannot obtain the context of the terminal device can be avoided, and additional signaling overheads can be avoided.

It may be understood that, to implement the foregoing functions, the terminal device includes a corresponding hardware and/or software module for performing each function. In combination with example algorithm steps described in embodiments disclosed in this specification, this application may be implemented by hardware or a combination of hardware and computer software. Whether a function is performed by hardware or hardware driven by computer software depends on a particular application and a design constraint of the technical solutions. A person skilled in the art may use different methods to implement the described functions for each particular application with reference to embodiments, but it should not be considered that the implementation goes beyond the scope of this application.

In embodiments, the terminal device may be divided into functional modules based on the foregoing method examples, for example, each functional module may be obtained through division based on each corresponding function, or two or more functions may be integrated into one processing module. The integrated module may be implemented in a form of hardware. It should be noted that, in embodiments, division into the modules is an example, and is merely logical function division. During actual implementation, another division manner may be used.

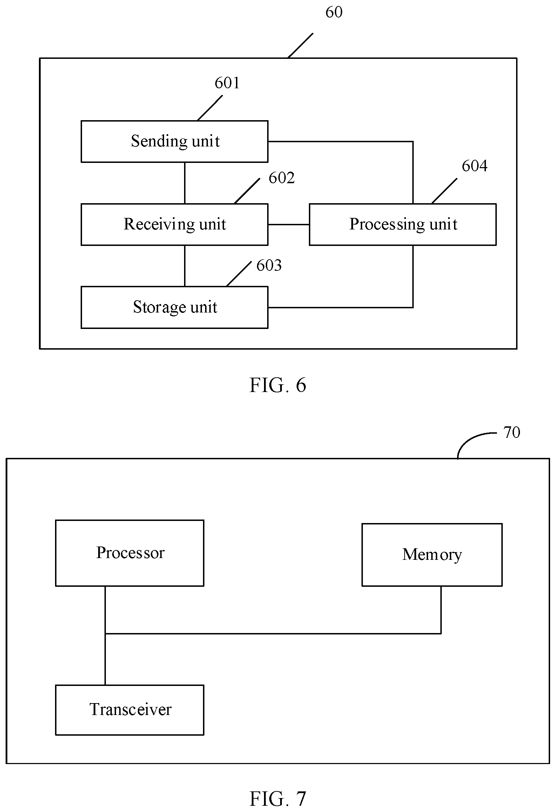

When each functional module is obtained through division based on each corresponding function, FIG. 6 is a possible schematic composition diagram of a terminal device 60 in the foregoing embodiments. As shown in FIG. 6, the terminal device 60 may include a sending unit 601, a receiving unit 602, a storage unit 603, and a processing unit 604.

The sending unit 601 may be configured to support the terminal device 60 in performing step 301, step 304, step 401, step 501, step 505, and the like, and/or another process of the technology described in this specification.

The receiving unit 602 may be configured to support the terminal device 60 in performing the foregoing step 502 and the like, and/or another process of the technology described in this specification.

The storage unit 603 may be configured to support the terminal device 60 in performing step 302, step 402, step 502, and the like, and/or another process of the technology described in this specification.

The processing unit 604 may be configured to support the terminal device 60 in performing step 303, step 403, step 503, step 504, step 506, and the like, and/or another process of the technology described in this specification.

It should be noted that all related content of the steps in the foregoing method embodiments may be cited in function description of corresponding functional modules. Details are not described herein again.

The terminal device 60 provided in this embodiment is configured to perform the foregoing method for processing a non-access stratum context, and therefore can achieve a same effect as the foregoing implementation method.

When an integrated unit is used, the terminal device 60 may include a processing module, a storage module, and a communication module. The processing module may be configured to control and manage an action of the terminal device 60, for example, may be configured to support the terminal device 60 in performing the steps performed by the processing unit 604. The storage module may be configured to support the terminal device 60 in storing program code, data, and the like, and may be further configured to support the electronic device 1100 in performing an action of the storage unit 603. The communication module may be configured to support communication between the terminal device 60 and another device, and may include the sending unit 601 and the receiving unit 602. For example, the communication module may be configured to support communication with a PLMN.

The processing module may be a processor or a controller. The processing module may implement or execute various example logical blocks, modules, and circuits described with reference to content disclosed in this application. The processor may alternatively be a combination for implementing a computing function, for example, a combination including one or more microprocessors or a combination of a digital signal processor (digital signal processing, DSP) and a microprocessor. The storage module may be a memory. The communication module may be specifically a device, for example, a radio frequency circuit, a Bluetooth chip, or a Wi-Fi chip, that interacts with another electronic device.

In an embodiment, when the processing module is a processor, the storage module is a memory, and the communication module is a transceiver, the terminal device in this embodiment may be an electronic device 70 having a structure shown in FIG. 7.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps to implement the method for processing a non-access stratum context in the foregoing embodiments.

An embodiment of this application further provides a computer storage medium. The computer storage medium stores computer instructions. When the computer instructions are run on an electronic device, the electronic device is enabled to perform the foregoing related method steps to implement the method for processing a non-access stratum context in the foregoing embodiments.

An embodiment of this application further provides a computer program product. When the computer program product is run on a computer, the computer is enabled to perform the foregoing related steps to implement the method for processing a non-access stratum context performed by the electronic device in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the method for processing a non-access stratum context performed by the electronic device in the foregoing method embodiments.

The electronic device, the computer storage medium, the computer program product, or the chip provided in embodiments is configured to perform the corresponding method provided above. Therefore, for beneficial effects that can be achieved, refer to the beneficial effects of the corresponding method provided above. Details are not described herein again.

Another embodiment of this application provides a system. The system may include devices such as the terminal device and the AMF in the PLMN, and may be configured to implement the foregoing method for processing a non-access stratum context.

Based on the foregoing descriptions of the implementations, a person skilled in the art may understand that for the purpose of convenient and brief description, division into the foregoing functional modules is merely used as an example for illustration. During actual application, the foregoing functions can be allocated to different functional modules for implementation based on a requirement, that is, an inner structure of an apparatus is divided into different functional modules to implement all or a part of the functions described above.

In the several embodiments provided in this application, it should be understood that the disclosed apparatus and method may be implemented in another manner. For example, the described apparatus embodiment is merely an example. For example, division into the modules or units is merely logical function division. There may be another division manner during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate components may or may not be physically separate, and components displayed as units may be one or more physical units, that is, may be located in one place, or may be distributed on a plurality of different places. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially, or the part contributing to the conventional technology, or all or a part of the technical solutions may be implemented in the form of a software product. The software product is stored in a storage medium and includes several instructions for instructing a device (which may be a single-chip microcomputer, a chip or the like) or a processor (processor) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for processing a non-access stratum context, comprising:
sending, by a terminal device, a first registration request message to a first public land mobile network PLMN;
receiving, by the terminal device, a registration accept message from the first PLMN; and
when the terminal device deregisters from the first PLMN over a first access network, storing, by the terminal device in a storage medium of the terminal device, a first PLMN identifier of the first PLMN and a first NAS security context established by the terminal device with the first PLMN.

2. The method according to claim 1, wherein after the terminal device deregisters from the first PLMN over the first access network, the method further comprises:
before the terminal device sends a second registration request message to the first PLMN, determining, by the terminal device based on the first PLMN identifier, the first NAS security context established by the terminal device with the first PLMN;
protecting, by the terminal device, the second registration request message by using the first NAS security context; and
sending, by the terminal device to the first PLMN over the first access network, the second registration request message protected by using the first NAS security context.

3. The method according to claim 1 or 2, wherein the storing, by the terminal device in a storage medium of the terminal device, a first PLMN identifier of the first PLMN and a first NAS security context established by the terminal device with the first PLMN comprises:
if a universal subscriber identity module USIM of the terminal device supports storage of a registration management parameter, storing, by the terminal device, the first NAS security context and the first PLMN identifier on the USIM; or
if a USIM does not support storage of a registration management parameter, storing, by the terminal device, the first NAS security context and the first PLMN identifier in a non-volatile storage medium of the terminal device.

4. The method according to any one of claims 1 to 3, wherein the method further comprises:
setting, by the terminal device, the first NAS security context to valid.

5. The method according to any one of claims 1 to 4, wherein the storing, by the terminal device in a storage medium of the terminal device, a first PLMN identifier of the first PLMN and a first NAS security context established by the terminal device with the first PLMN comprises:
if the storage medium of the terminal device does not store a NAS security context established by the terminal device with the first PLMN, storing, by the terminal device, a first NAS security file and the first PLMN identifier in the storage medium of the terminal device; or
if the storage medium of the terminal device already stores the first PLMN identifier and a NAS security context established by the terminal device with the first PLMN, replacing, by the terminal device, the stored NAS security context with the first NAS security context.

6. The method according to any one of claims 1 to 4, wherein the storing, by the terminal device in a storage medium of the terminal device, a first PLMN identifier of the first PLMN and a first NAS security context established by the terminal device with the first PLMN comprises:
if the storage medium of the terminal device does not store a NAS security context that corresponds to the first access network, storing, by the terminal device, the first NAS security context and the first PLMN identifier in the storage medium of the terminal device; or
if the storage medium of the terminal device already stores a NAS security context that corresponds to the first access network, replacing, by the terminal device, the stored NAS security context that corresponds to the first access network with the first NAS security context, and storing the first PLMN identifier.

7. The method according to any one of claims 1 to 6, wherein before the storing, by the terminal device in a storage medium of the terminal device, a first PLMN identifier of the first PLMN and a first NAS security context established by the terminal device with the first PLMN, the method further comprises:
deregistering, by the terminal device, from the first PLMN over all access networks.

8. The method according to any one of claims 1 to 7, wherein the method further comprises:
storing, by the terminal device, first time information, wherein the first time information is a moment at which the terminal device last uses the first NAS security context, a moment at which the terminal device deregisters from the first PLMN, a moment at which the terminal device stores the first NAS security context, or a validity period of the first NAS security context.

9. The method according to claim 8, wherein the method further comprises:
determining, by the terminal device based on the first time information, that the first NAS security context is invalid; and
deleting, by the terminal device, the first NAS security context stored in the storage medium of the terminal device or setting the first NAS security context to invalid.

10. The method according to claim 9, wherein the method further comprises:
deleting, by the terminal device, the first PLMN identifier from the storage medium of the terminal device or setting the first PLMN identifier to invalid.

11. The method according to any one of claims 1 to 10, wherein the method further comprises:
storing, by the terminal device, an identifier of the first access network in the storage medium of the terminal device.

12. The method according to any one of claims 1 to 11, wherein before the terminal device deregisters from the first PLMN over the first access network, the method further comprises:
receiving, by the terminal device, a first globally unique temporary user equipment identity GUTI allocated by the first PLMN, wherein the first GUTI is used to identify the terminal device, and the first GUTI comprises the first PLMN identifier; and
if the storage medium of the terminal device already stores a second GUTI, deleting, by the terminal device, the second GUTI and storing the first GUTI, or replacing the second GUTI with the first GUTI; or
if the storage medium of the terminal device does not store a second GUTI, storing, by the terminal device, the first GUTI, wherein
the second GUTI is sent to the terminal device before the first PLMN allocates the first GUTI, and the second GUTI comprises the first PLMN identifier.

13. The method according to any one of claims 1 to 12, wherein after the sending, by a terminal device, a first registration request message to a first public land mobile network PLMN, the method further comprises:
receiving, by the terminal device from the first PLMN, a second PLMN identifier of a second PLMN equivalent to the first PLMN; and
storing, by the terminal device, the second PLMN identifier in the storage medium of the terminal device.

14. The method according to claim 13, wherein after the terminal device deregisters from the first PLMN over the first access network, the method further comprises:
obtaining, by the terminal device based on the second PLMN identifier, a third GUTI allocated by the second PLMN;
comprising, by the terminal device, the third GUTI in a third registration request message; and
sending, by the terminal device, the third registration request message to the first PLMN.

15. A method for processing a non-access stratum context, comprising:
before a terminal device sends a registration request message to a first public land mobile network PLMN over a first access network, obtaining, by the terminal device based on a first PLMN identifier of the first PLMN from a storage medium of the terminal device, a first NAS security context established by the terminal device with the first PLMN;
protecting, by the terminal device, the registration request message by using the first NAS security context; and
sending, by the terminal device to the first PLMN over the first access network, the registration request message protected by using the first NAS security context.

16. The method according to claim 15, wherein the obtaining, by the terminal device based on a first PLMN identifier from a storage medium of the terminal device, a first NAS security context established by the terminal device with the first PLMN comprises:
if a universal subscriber identity module USIM of the terminal device supports storage of a registration management parameter, reading, by the terminal device, the first NAS security context from the UISM based on the first PLMN identifier; or
if a USIM does not support storage of a registration management parameter, reading, by the terminal device, the first NAS security context from a non-volatile storage medium of the terminal device based on the identifier of the first PLMN.

17. The method according to claim 15 or 16, wherein the obtaining, by the terminal device based on a first PLMN identifier of the first PLMN from a storage medium of the terminal device, a first NAS security context established by the terminal device with the first PLMN comprises:
obtaining, by the terminal device based on the first PLMN identifier and an identifier of the first access network, the first NAS security context that corresponds to the first access network and that is established by the terminal device with the first PLMN from the storage medium of the terminal device.

18. The method according to claim 15, wherein before the terminal device sends the registration request message to the first PLMN, the method further comprises:
obtaining, by the terminal device from the storage medium of the terminal device, a second PLMN identifier of a second PLMN equivalent to the first PLMN;
obtaining, by the terminal device based on the second PLMN identifier from the storage medium of the terminal device, a second globally unique temporary user equipment identity GUTI allocated by the second PLMN; and
comprising, by the terminal device, the second GUTI in the registration request message.

19. The method according to any one of claims 15 to 17, wherein before the terminal device sends the registration request message to the first PLMN, the method further comprises:
obtaining, by the terminal device based on the first PLMN identifier from the storage medium of the terminal device, a first GUTI allocated by the first PLMN; and
comprising, by the terminal device, the first GUTI in the registration request message.

20. A terminal device, comprising:
a sending module, configured to send a first registration request message to a first public land mobile network PLMN;
a receiving module, configured to receive a registration accept message from the first PLMN; and
a processing module, configured to: when the terminal device deregisters from the first PLMN over a first access network, store, in a storage medium of the terminal device, a first PLMN identifier of the first PLMN and a first NAS security context established by the terminal device with the first PLMN.

21. The terminal device according to claim 20, wherein the processing module is further configured to:
before the sending module sends a second registration request message to the first PLMN, determine, based on the first PLMN identifier, the first NAS security context established by the terminal device with the first PLMN; and
protect the second registration request message by using the first NAS security context; and
the sending module is further configured to send, to the first PLMN over the first access network, the second registration request message protected by using the first NAS security context.

22. The terminal device according to claim 20 or 21, wherein the processing module is configured to:
if a universal subscriber identity module USIM of the terminal device supports storage of a registration management parameter, store the first NAS security context and the first PLMN identifier on the USIM; or
if a USIM does not support storage of a registration management parameter, store the first NAS security context and the first PLMN identifier in a non-volatile storage medium of the terminal device.

23. The terminal device according to any one of claims 20 to 22, wherein the processing module is further configured to:
set the first NAS security context to valid.

24. The terminal device according to any one of claims 20 to 23, wherein the processing module is configured to:
if the storage medium of the terminal device does not store a NAS security context established by the terminal device with the first PLMN, store a first NAS security file and the first PLMN identifier in the storage medium of the terminal device; or
if the storage medium of the terminal device already stores the first PLMN identifier and a NAS security context established by the terminal device with the first PLMN, replace the stored NAS security context with the first NAS security context.

25. The terminal device according to any one of claims 20 to 24, wherein the processing module is configured to:
if the storage medium of the terminal device does not store a NAS security context that corresponds to the first access network, store the first NAS security context and the first PLMN identifier in the storage medium of the terminal device; or
if the storage medium of the terminal device already stores a NAS security context that corresponds to the first access network, replace the stored NAS security context that corresponds to the first access network with the first NAS security context, and store the first PLMN identifier.

26. The terminal device according to any one of claims 20 to 25, wherein the processing module is further configured to:
deregister from the first PLMN over all access networks.

27. The terminal device according to any one of claims 20 to 26, wherein the processing module is further configured to:
store first time information, wherein the first time information is a moment at which the terminal device last uses the first NAS security context, a moment at which the terminal device deregisters from the first PLMN, a moment at which the terminal device stores the first NAS security context, or a validity period of the first NAS security context.

28. The terminal device according to claim 27, wherein the processing module is further configured to:
determine, based on the first time information, that the first NAS security context is invalid; and
delete the first NAS security context stored in the storage medium of the terminal device or set the first NAS security context to invalid.

29. The terminal device according to claim 28, wherein the processing module is further configured to:
delete the first PLMN identifier from the storage medium of the terminal device or set the first PLMN identifier to invalid.

30. The terminal device according to any one of claims 20 to 29, wherein the processing module is further configured to:
store an identifier of the first access network in the storage medium of the terminal device.

31. The terminal device according to any one of claims 20 to 30, wherein the receiving module is further configured to:
receive a first globally unique temporary user equipment identity GUTI allocated by the first PLMN, wherein the first GUTI is used to identify the terminal device, and the first GUTI comprises the first PLMN identifier; and
the processing module is further configured to:
if the storage medium of the terminal device already stores a second GUTI, delete the second GUTI and store the first GUTI, or replace the second GUTI with the first GUTI; or
if the storage medium of the terminal device does not store a second GUTI, store the first GUTI, wherein
the second GUTI is sent to the terminal device before the first PLMN allocates the first GUTI, and the second GUTI comprises the first PLMN identifier.

32. The terminal device according to any one of claims 20 to 31, wherein the receiving module is further configured to:
receive, from the first PLMN, a second PLMN identifier of a second PLMN equivalent to the first PLMN; and
the processing module is further configured to store the second PLMN identifier in the storage medium of the terminal device.

33. The terminal device according to claim 32, wherein the processing module is further configured to:
obtain, based on the second PLMN identifier, a third GUTI allocated by the second PLMN; and
comprise, by the terminal device, the third GUTI in a third registration request message; and
the sending module is further configured to send the third registration request message to the first PLMN.

34. A terminal device, comprising:
a processing module, configured to: before a terminal device sends a registration request message to a first public land mobile network PLMN over a first access network, obtain, based on a first PLMN identifier of the first PLMN from a storage medium of the terminal device, a first NAS security context established by the terminal device with the first PLMN; and protect the registration request message by using the first NAS security context; and
a sending module, configured to send, to the first PLMN over the first access network, the registration request message protected by using the first NAS security context.

35. The terminal device according to claim 34, wherein the processing module is configured to:
if a universal subscriber identity module USIM of the terminal device supports storage of a registration management parameter, read the first NAS security context from the UISM based on the first PLMN identifier; or
if a USIM does not support storage of a registration management parameter, read the first NAS security context from a non-volatile storage medium of the terminal device based on the identifier of the first PLMN.

36. The terminal device according to claim 34 or 35, wherein the processing module is configured to:
obtain, based on the first PLMN identifier and an identifier of the first access network, the first NAS security context that corresponds to the first access network and that is established by the terminal device with the first PLMN from the storage medium of the terminal device.

37. The terminal device according to claim 34, wherein the processing module is configured to:
obtain, from the storage medium of the terminal device, a second PLMN identifier of a second PLMN equivalent to the first PLMN;
obtain, based on the second PLMN identifier from the storage medium of the terminal device, a second globally unique temporary user equipment identity GUTI allocated by the second PLMN; and
comprise the second GUTI in the registration request message.

38. The terminal device according to any one of claims 34 to 36, wherein the processing module is further configured to:
obtain, based on the first PLMN identifier from the storage medium of the terminal device, a first GUTI allocated by the first PLMN; and
comprise the first GUTI in the registration request message.

39. A computer-readable storage medium, wherein the storage medium stores computer instructions, and when the computer instructions are run on an electronic device, the electronic device is enabled to perform the method according to any one of claims 1 to 19.
